Europäisches Patentamt

(19) **European Patent Office**

Office européen des brevets

(11) Publication number: **0 073 818**
**B1**

(12) # EUROPEAN PATENT SPECIFICATION

(45) Date of publication of patent specification: **16.09.87**

(51) Int. Cl.⁴: **B 23 K 9/20**

(21) Application number: **82901212.9**

(22) Date of filing: **05.03.82**

(86) International application number:
**PCT/US82/00273**

(87) International publication number:
**WO 82/03033 16.09.82 Gazette 82/22**

(54) WELDING APPARATUS.

(30) Priority: **06.03.81 US 241072**

(43) Date of publication of application:
**16.03.83 Bulletin 83/11**

(45) Publication of the grant of the patent:
**16.09.87 Bulletin 87/38**

(84) Designated Contracting States:
**BE DE FR GB LU NL SE**

(56) References cited:
**US-A-4 034 212**
**US-A-4 104 724**
**US-A-4 117 298**
**US-A-4 241 285**

**Electronic Design 22, issued 25 October 1975, A.J. Weissberger, Microprocessors Simplify Industrial Control, See pages 98-99**

(73) Proprietor: **KSM FASTENING SYSTEMS, INC.**
**301 New Albany Road**
**Moorestown New Jersey 08057 (US)**

(72) Inventor: **WILKINSON, Harold C.**
**63 North Lakeside Drive West**
**Medford, NJ 08055 (US)**
Inventor: **GUM, Charles E.**
**English Village Apt.**
**North Wales, PA 19454 (US)**
Inventor: **HOWE, Rodney C.**
**10 West Atlantic Avenue**
**Haddon Heights, NJ 08035 (US)**
Inventor: **MACINSKAS, Dean P.**
**124 Washington Avenue**
**Souderton, PA 18964 (US)**
Inventor: **PEASE, Charles C.**
**RR3, Carranza Road**
**Vincentown, NJ 08088 (US)**
Inventor: **RAYCHER, Robert J.**
**RR 1, Burrs Mill Road**
**Vincentown, NJ 08088 (US)**
Inventor: **ROSEN, Ronald**
**168 Cardinal Road**
**Chalfont, PA 18914 (US)**
Inventor: **WILLIAMS, Francis J.**
**5 Beechwood Drive**
**Chalfont, PA 18914 (US)**

Courier Press, Leamington Spa, England.

**0 073 818**

(74) Representative: **Abnett, Richard Charles et al
REDDIE & GROSE 16 Theobalds Road
London WC1X 8PL (GB)**

## Description

The present invention applies to apparatus for welding together two metallic workpieces by heating by an electric welding arc, including an alternating current power supply, a welding gun for holding one workpiece through which weld current is passed in creating the welding arc, weld current cable means interconnecting the current power supply and the gun, and a general purpose digital computer for use in controlling operation of the apparatus.

In stud welding apparatus, it is important not only that the weld current for a given size of stud be maintained extremely close to a given desired current but it is also important that the total energy generated by the arc very closely equal an ideal predetermined value. The total energy in stud welding is the product of the weld current, voltage and time that the weld current is on.

Historically in the very early beginning of welding of the type of stick welding and stud welding, welding current was controlled by such devices as a saturable reactor. Variation in the input to the reactor windings would control output from the transformer and thus the welding current. In the case of stud welding, this unregulated but variable current applied over a given time was the only means of controlling total energy. Additionally, such devices were used as a fixed power supply together with a plurality of different resistors in series with the power supply, one of which would be chosen by plugging into an output terminal associated with that resistor as the means of selecting output current. This latter method while selectible was unregulated during the welding operation whether in stick mode or in stud mode in which a timed function for initiating and terminating the weld was also utilized.

In subsequent welding apparatus and particularly stud welding apparatus, attempts were made to regulate the total welding energy. Devices of this type would utilize a rectified AC input and a variable timer to initiate and terminate the welding cycle. A transformer winding associated with the power supply could provide a signal indicative of the welding current which would be applied to an R-C network which would adjust the variable timer in accordance with the level of welding current to terminate the welding cycle in some approximation of when the desired total energy has been reached.

In more modern and improved stick and stud welding controllers, an analog approach to welding current regulation has been utilized. In these devices, an AC power supply is utilized through an SCR bridge to provide the welding current. Devices such as operational amplifiers operating in conjunction with means to generate a reference signal indicative of the level of welding current and a reference indicative of the desired current level are utilized to control phase firing of the SCRs in an effort to achieve the desired welding current level. Welding current controllers of this type used in arc stud welding operate only for a fixed time and do not have the capability of total weld energy computation.

The prior art devices including the analog devices have many disadvantages and drawbacks. The analog devices, while an improvement over the devices preceding them, are not as accurate as desired. Analog devices are temperature sensitive and this is one of the major problems affecting their accuracy. Additionally, wide variations in range are difficult to compensate for and handle in analog devices. In arc stud welding, current ranges are from as low as 50 amps to as high as 2,000 amps. Accuracy in controlling the exact total energy in the weld and particularly in stud welding is becoming extremely important. In such industries as the nuclear power industry it is critical.

The welding controllers of the prior art also are generally inflexible. None of the arc stud welding controllers heretofore known have any appreciable regulation or control of the pilot arc. The controllers heretofore essentially only regulate current and do not attempt to compute and, in the case of stud welding, control the total energy input to the stud welding operation. The prior art controllers likewise have no capability of altering or generally varying the welding current wave form to different significant values at given predetermined points throughout the welding cycle.

Other matters of inflexibility concerning analog controllers and other controllers heretofore known is their inability to store the parameters affecting a weld in a given weld cycle such as output current, number of cycles, voltage, total energy and the like. Additionally, none of the controllers heretofore known provide any visual readout of all of these parameters nor do they provide a permanent record such as a printout of these various parameters. In the case of such industries as the nuclear power energy, a printout of each weld is extremely desirable.

The welding controllers heretofore known for stick and particularly for stud welding and especially the analog controllers are not cost effective. To modify or add to those devices heretofore known to provide all of the features described above would be extremely difficult, cumbersome and expensive if not totally unfeasible.

Some use of microprocessors with welding apparatus is known from an article at pages 98 to 99 of Electronic Design, No 22 of 25th October 19785, entitled "Microprocessors Simplify Industrial Control", by A J Weissburger, and from United States patent specification Nos 4,104,724 and 4,034,212.

United States patent specification No. 4,104,724 discloses the use of a microprocessor primarily for a diagnostics review of various functional aspects of a welding system such as transformer temperature, shorted components, and so on. Also the microprocessor is used to make reference to a look up table representing a preselected percentage of transformer output and compare this to the actual percentage of transformer output and change the phase angle of firing of SCR's to compensate for any power factor

**0 073 818**

variation. However, this United States specification does not consider the problems of controlling the actual welding current and adjustment of total welding energy.

According to the present invention, apparatus of the type defined hereinbefore is characterifed in that the gun is a stud welding gun and that, for controlling, during a welding sequence, the total welding energy delivered from the welding current power supply to a welding stud carried by the stud welding gun the apparatus includes:

programmable weld current reference means accessible by the computer into which the ideal weld current can be set and providing an ideal weld current reference signal;

weld current sensing means accessible by the computer providing an actual weld current signal proportional to the actual weld current;

current regulating means under control of the computer capable of initiating, varying and terminating the output of the current power supply;

a program for the general purpose computer to instruct the computer to periodically compare the ideal weld current reference signal with the actual weld current signal and adjust the current regulating means to adjust the actual weld current to equal the ideal weld current;

programmable weld current cycle reference means accessible by the computer into which a preselected number of weld current cycles can be set and providing an ideal weld current cycle reference signal;

weld current cycle counting means providing an actual welding current cycle count accessible by the computer; and

welding voltage sensing means accessible by the computer providing an actual weld voltage signal proportional to the actual welding terminal voltage;

wherein the program further instructs the computer to compare the ideal weld current cycle reference signal with the actual weld current cycle count and, upon a given relationship between the two occurring, to compute and store each of the average welding current, average welding voltage and total welding sequence time and compute and store the total weld sequence energy as the product of the average welding current, average welding voltage and total welding sequence time, and to compute and compare the ideal total weld sequence energy with the actual total weld sequence energy and, if the actual total energy is substantially less than the ideal total energy, to cause a number of additional weld current cycles proportional to the difference and not more than a fixed maximum percentage of the said set preselected number of weld current cycles to be carried out.

In a preferred embodiment of the present invention, the general purpose digital computer is a microprocessor system which includes, inter alia, ROM memory, RAM memory, and peripheral interface adapters communicating the various input and output devices as hereinafter described. The main welding current is supplied by means of a three phase input current which is regulated through a phase fired SCR bridge to provide the output welding current. Welding current is sensed by means of welding current transformers associated with the output of the SCR bridge. The welding current signals together with the welding terminal voltage and phase rotation are provided to the microprocessor system as digital representations of these variables or parameters by means of an analog to digital converter.

The preferred apparatus is capable of controlling welding current for stick welding and for stud welding. The system includes two sets of thumbwheels into which the number of weld cycles can be selected and placed as well as the welding current for both the pilot arc and main welding current or, in the case of stick welding, the welding current alone. The apparatus also includes a switch for selecting the stick or stud welding mode as well as switches to permit the variables set in the thumbwheels to be registered either as main welding current parameters or pilot arc parameters. Additionally, a visual display is provided together with a display select switch to select the various parameters desired to be displayed. A mechanical printer is also provided which prints out all of the welding parameters calculated and stored by the microprocessor. Appropriate input output devices are employed to facilitate interfacing of the foregoing devices to and from the microprocessor system.

In the stick mode of operation, the stick mode switch is set and the appropriate welding current level selected in the current thumbwheels. This information is automatically stored in the memory of the microprocessor system. During welding the microprocessor continuously monitors the welding current and compares this current to the ideal current set in the thumbwheels. The difference between the actual and ideal current is calculated and used in conjunction with a lookup table to calculate the change in phase angle firing of the SCRs necessary to bring the actual welding current into conformity with the ideal welding current selected.

The welding current controller, when in the stud welding mode, will have set in the thumbwheels the desired number of cycles for the pilot arc and the desired current for the pilot arc. The pilot arc switch is selected which will then store these values into the microprocessor system's memory. Thereafter, the desired or ideal welding current cycles and welding current current value is selected and stored in the memory of the microprocessor system.

Upon initiation of the welding cycle, the microprocessor system will select an initial SCR phase angle firing from memory for the pilot arc. Thereafter, the actual pilot arc current will be computed and compared to the pilot arc current selected and the necessary phase angle correction computed and applied to the SCRs to bring the pilot arc current into regulation equal to that selected. The microprocessor system will

4

# 0 073 818

reference the desired number of pilot arc cycles and continue the pilot arc for that number of cycles. Near the completion of the pilot arc sequence, the current level in the pilot arc is sensed to determine if it is at a necessary minimum. If it is not, the pilot arc sequence is aborted and reinitiated a specified number of times. Otherwise, the main welding current sequence is then initiated.

The regulation of the main welding current is the same as the pilot arc. At the end of the main welding current cycle, the microprocessor will have computed and stored the various welding parameters such as current, number of cycles, welding voltage, total energy, and will also have computed such values as the percent of deviation of the number of actual cycles required to achieve the total energy versus the desired number of cycles. Based upon these calculations, various error signals will be displayed and, depending upon the nature of the error signal, the condition of the equipment altered from displaying the error signal to total shutdown of the equipment.

At the end of the weld cycle, the operator may choose and have displayed on an illuminated display any of the parameters calculated and stored in the microprocessor system such as the welding terminal voltage, welding current, total energy, number of weld cycles, both for the pilot arc welding sequence and the main welding sequence. Additionally, a mechanical printer is interfaced with the welding controller which, when in the stud welding mode, will for each weld print out all of the foregoing parameters for a permanent record.

Other objects and advantages of the present invention will become apparent to those skilled in the art from the detailed description thereof which follows in conjunction with the drawings.

Brief description of drawings

Figures 1 and 2, when consolidated, provide a complete block diagram of the stick/stud welding controller of the present invention;

Figures 3—13 are schematic diagrams of the components set forth in the block diagram of Figures 1 and 2 together with the interconnections between the respective components and the logic devices therebetween;

Figures 14—37 are logic flow diagrams upon which the microprocessor program is based for the particular main routine, subroutine or interrupt service routine as labeled on the flow chart; and

Figure 38 is a timing diagram illustrating the relationship of the weld cycle to the phase angle firing timing and adjustments.

Best mode for carrying out the invention

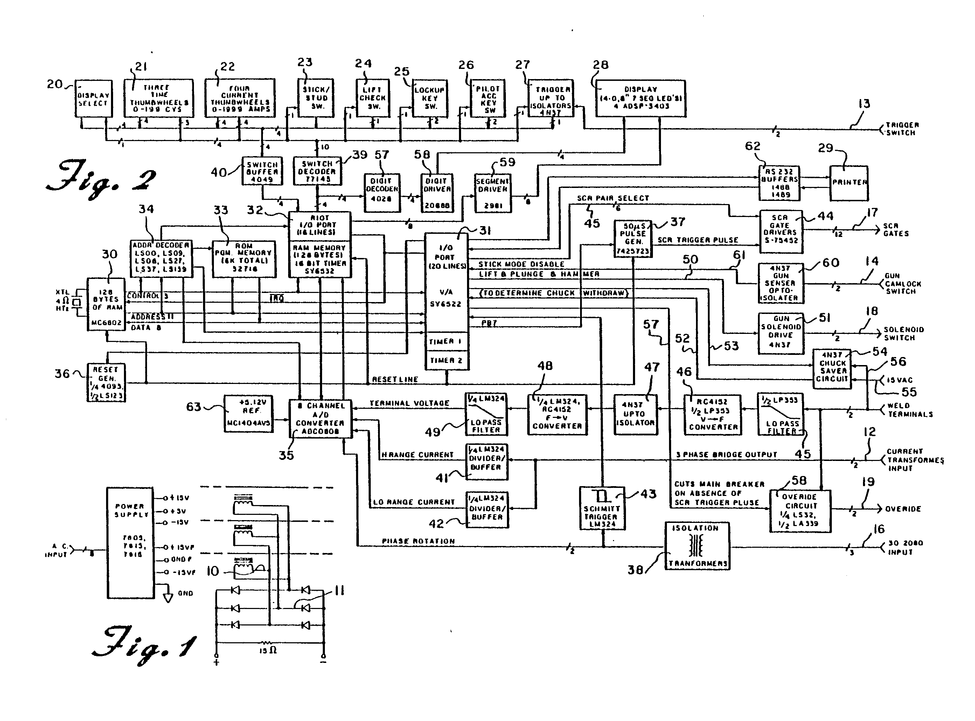

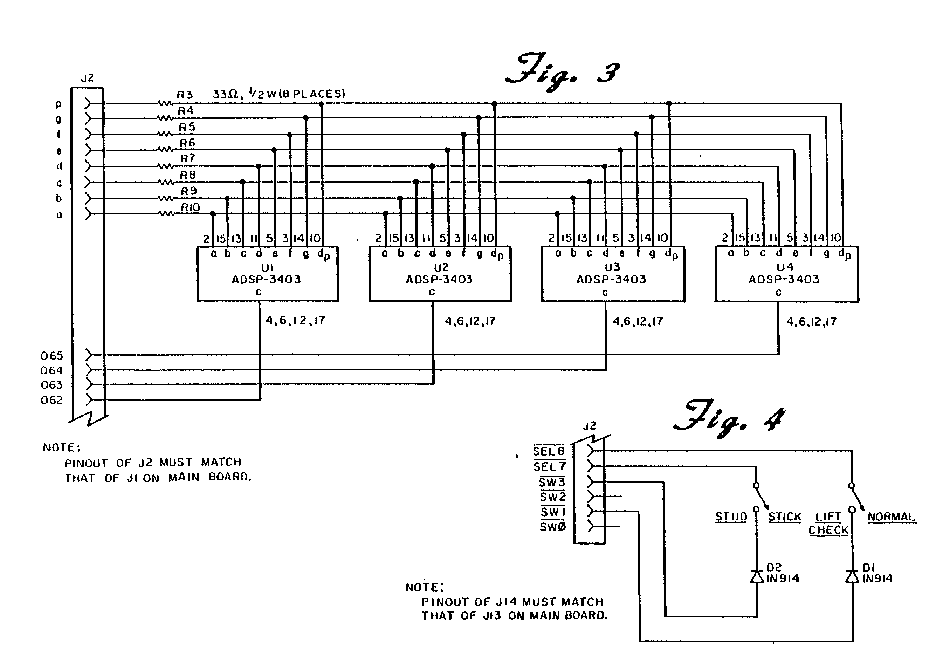

I. Functional block diagram figures 1 and 2

A functional block diagram of the stick/stud welding controller of the present invention is shown in Figures 1 and 2 of the drawings. A table of components is set out in section V entitled "Charts" and reference to the table can be made for the component designation and manufacturer of the various components in the block diagram to be described hereinafter.

Figures 1 and 2 illustrate only the functional block diagram of the microprocessor system and the input output peripheral devices. The remainder of the welding system which is controlled by the invention and which is of a conventional nature has not been shown inasmuch as it is not believed necessary to an understanding of the invention. The components in the remainder of the stud welding system include such standard configurations of component assemblies as the stud welding gun and its included lift solenoid and trigger, a secondary power supply and control circuitry for operation of the gun solenoid and associated equipment and a three phase power supply including the associated transformers and a six SCR bridge together with associated welding cables and welding cable line inductor. This equipment to which the present invention applies is of a standard and conventional nature as heretofore known.

Referring to Figures 1 and 2, and particularly the insert appearing in Figure 1, each of the three output lines from the welding transformer includes a current transformer 10 which is tied into a bridge 11 to provide a signal which will be representative of the current flowing in each of the phases of the transformer. This input signal is applied to the welding controller of the present invention as shown in Figures 1 and 2 by means of the two input lines 12 shown on the right-hand side of Figure 2. Other inputs from the standard welding components to the welding controller and as shown on the right-hand side of Figure 2 and whose function will be described in more detail hereinafter, are the line pair 13 indicating closing of the trigger switch; line pair 14 indicating the welding cable for the stud welding gun is inserted in the proper receptacle for stud welding, line pair 15 across the weld terminals providing the controller with weld terminal voltage and three lines 16 connected across the three phase input to the welding power supply.

As shown in Figure 2, outputs from the welding controller of the present invention to the standard welding components heretofore described include twelve lines 17 constituting six line pairs of each of the SCR gates for phase firing. Additionally, a gun solenoid energize-deenergize line pair 18 serves to energize and deenergize the gun solenoid. Lastly, an override line pair 19 is wired to the main welding power supply circuit breaker to deenergize the breaker totally shutting down the welding power supply and welding controller upon energization of the line pair all as will be described hereinafter.

Shown at the upper portion of Figures 1 and 2 of the drawings are several peripherals to which the microprocessing system of the present invention communicates. These peripherals include a display select

**0 073 818**

thumbwheel 20 which will output a binary coded decimal signal indicative of the nature of information to be displayed in an illuminated display 28 which consists of four seven segment light emitting diodes. The peripherals include a three thumbwheel selector 21 into which the number of cycles may be selected for either pilot arc or welding current and a four thumbwheel selector 22 into which the pilot arc current or main welding current can be selected. These selectors 21 and 22 likewise provide a binary coded decimal output.

A selector switch 23 is provided which provides a binary output indicative of the selection of either stick or stud mode. A lift check switch 24 is provided which provides an output signal indicative of having chosen the mode for checking the lift of the gun solenoid or not as the case may be.

A lockup key switch 25 is provided which is a switch operable by a key under control of the operator and/or supervisor as desired. The switch provides three separate binary outputs depending upon the position setting. The three outputs are for "access"; "set" and "lockup".

A second switch entitled pilot arc key switch 26 is provided which likewise utilizes the same key as for the lockup key switch and may be in the possession of the operator or the supervisor as desired. The pilot arc key switch provides a two state output one for "access" and one for "set".

The lockup key switch and the pilot arc key switch, as will be described in more detail hereinafter, provides binary signals which are utilized in the logic of the microprocessor system to set and store the pilot arc and weld current parameters for both the number of cycles and current. When both switches are in the "access" mode, then the settings set the the thumbwheels 21 and 22 for number of cycles and current respectively will be stored as the parameters for the pilot arc. When the pilot arc switch is moved to "set" and the lockup key switch is set to "access", then the settings in the thumbwheels 21 and 22 will set the number of cycles and main welding current parameters which will be stored in the processing system. In this configuration, whenever the thumbwheels 21 and 22 are changed, the parameters will automatically be changed in memory for the number of cycles and current for the main welding cycles.

When the lockup key switch is moved to the "set" position, those values in the thumbwheels 21 and 22 will be set in memory and subsequent changing of these wheels will not affect the setting theretofore stored. Lastly, when the key switch for the lockup key switch 25 is in the "lockup" position, the logic will permit the welding controller to disenable the controller upon the occurrence of certain error conditions as hereinafter described.

A trigger optical isolator 27 is provided which senses the closing of the trigger at the stud welding gun and provides an output signal for the microprocessor system which is optically isolated from the stud welding gun itself. Lastly, a mechanical printer 29 which provides a paper tape printout of the parameters measured and calculated during the weld cycle is provided to provide the operators with a permanent record of each weld.

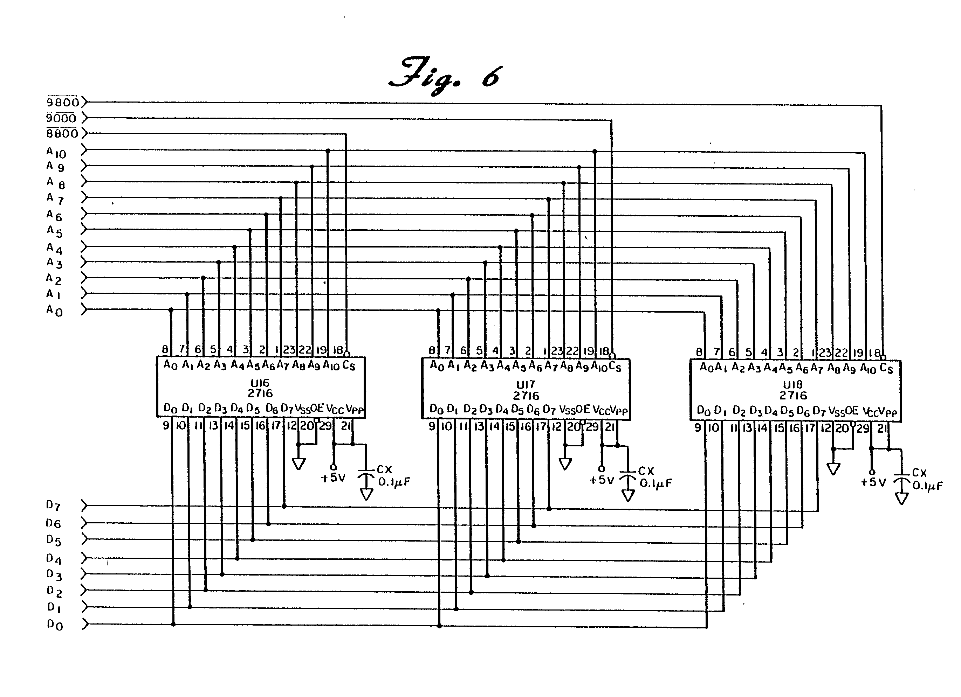

The welding controller includes a microprocessor 30 which basically includes eight data lines, sixteen address lines of which eleven are used in the present configuration, an interrupt request line and control lines of which three are used in the configuration of the present invention. Reference should be made to Figure 5 for a more detailed microprocessor pin connection detail. The microprocessor utilized is a Motorola 6802 microprocessor.

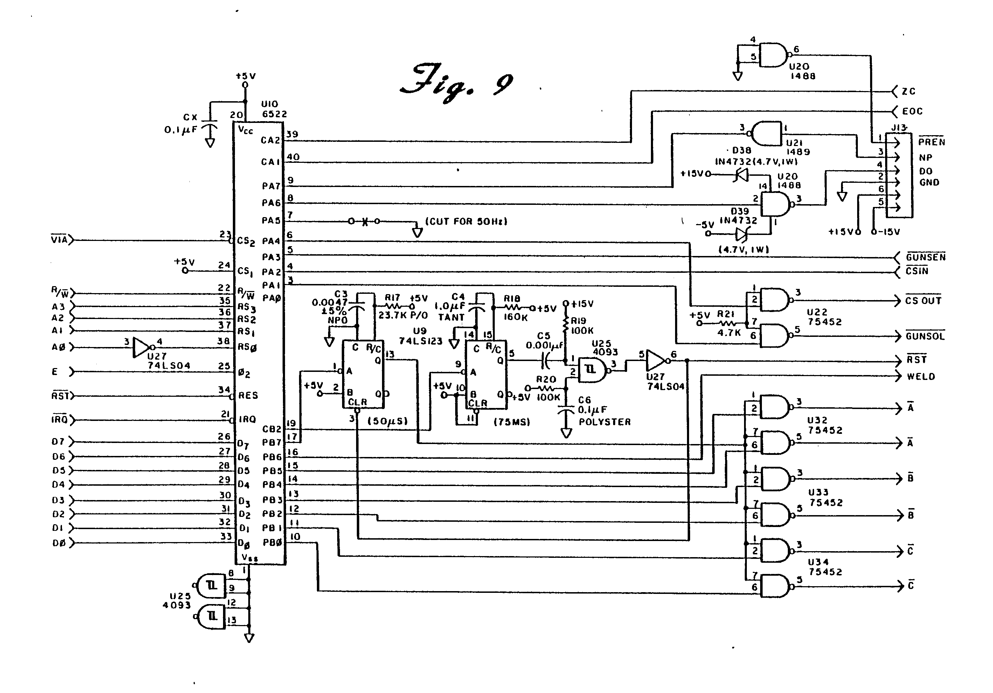

The microprocessor communicates with a versatile interface adapter (VIA) 31 which is manufactured by Synertek as number SY6522. The VIA includes two 8-bit bidirectional I/O ports, two 16-bit programmable timer/counters and serial data port, among other features. The VIA is the device through which the microprocessor communicates with the welding components heretofore described and as will be described in more detail hereinafter. Reference should be made to Figure 9 for the pin detail connections for the VIA.

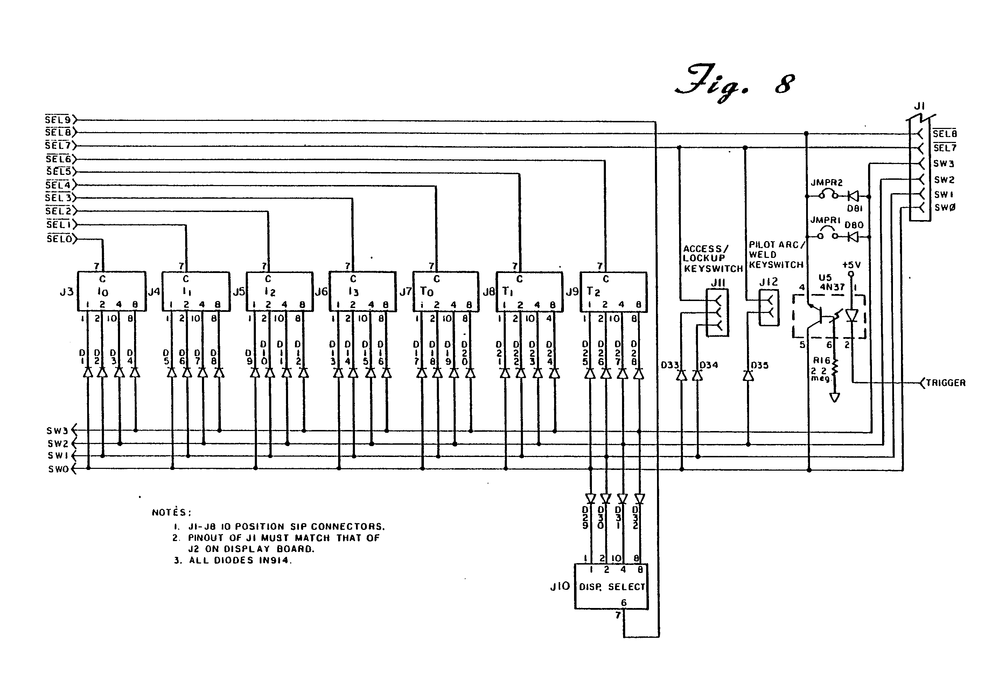

The microprocessor 30 also communicates with a combination RAM, I/O, timer array (RIOT) 32. The RIOT is manufactured by Synertek as model No. SY6532. This device is comprised of a 128×8 static RAM, two software controlled 8-bit bidirectional data ports allowing direct interfacing between the microprocessor unit and peripheral devices, a software programmable interval timer and interrupt circuit capabilities. The pin connection details for the RIOT device 32 are shown in Figure 7 of the drawings.

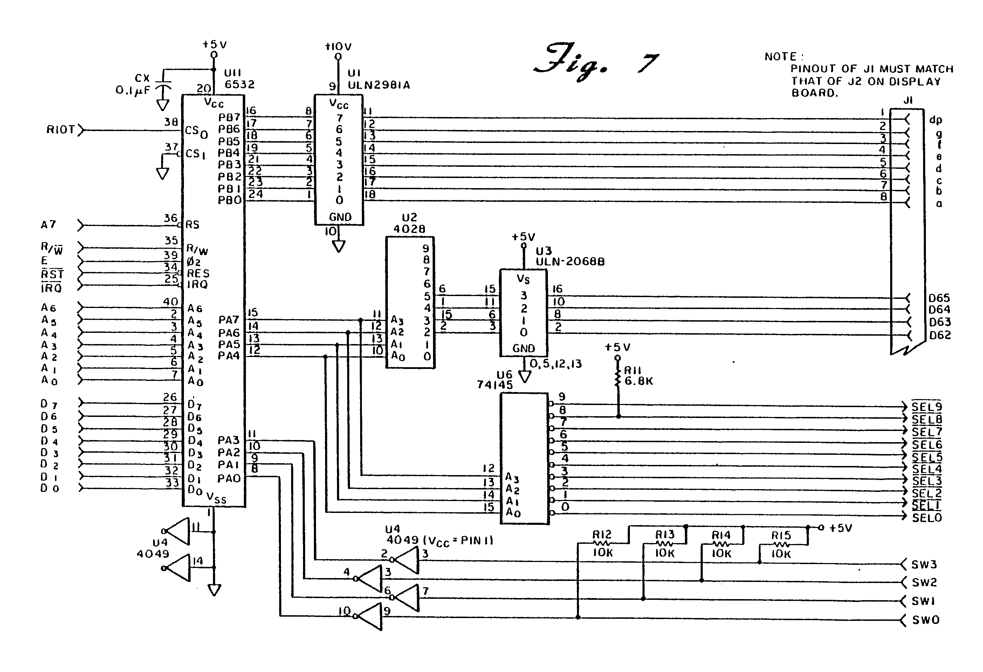

The microprocessor 30 receives its instructions from ROM memory 33. The ROM memory consists of six K of memory made up of three number 2716 ROM memory devices. The memory device pin connection details are shown in Figure 6 of the drawings.

The microprocessor 30 also communicates through an address decoder array 34 to the RIOT 32 and to an analog to digital converter 35 to be described hereinafter as well as the VIA 31. The details of the address decoder array components and logic are shown in Figure 5 of the drawings to which reference can be made for further detail.

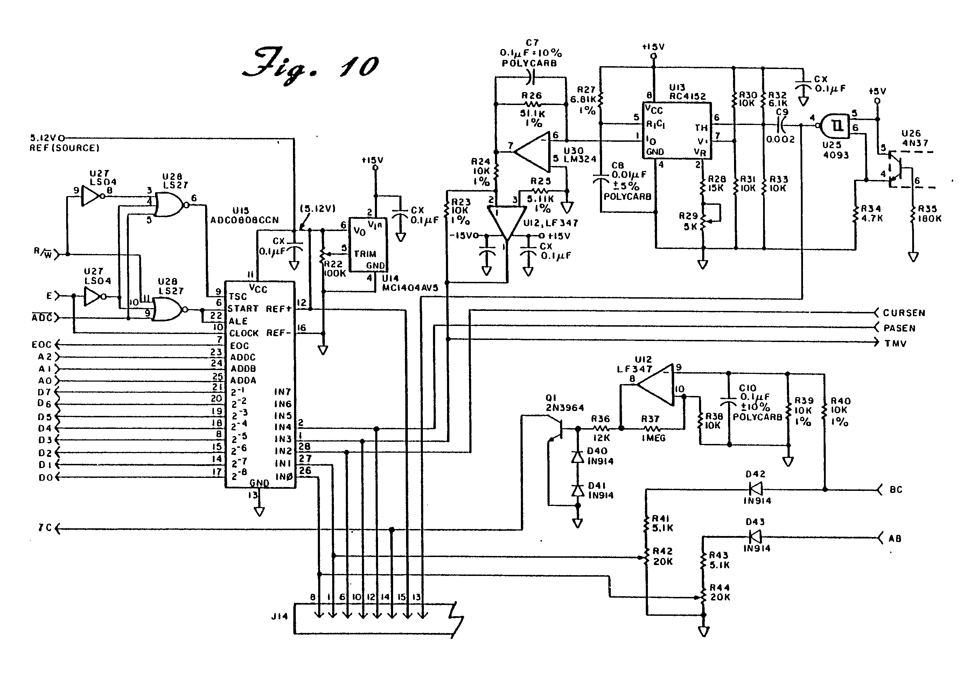

An analog to digital converter 35 is provided which passes analog data converted to digital upon the data bus for manipulation by the microprocessor 30. The analog to digital converter 35 is directly addressed by the microprocessor upon the address lines and also through the address decoder 34 as heretofore described. The details of the analog to digital converter pin connections are shown in detail in Figure 10 of the drawings.

The overall function or operation of the stud welding controller of the present invention shown in Figures 1 and 2 is best described and understood by describing a typical stud welding cycle beginning from startup. The main power switch (not shown) to the transformers, associated gun control circuitry and the

6

microprocessor control assembly is turned on to power up the equipment. Upon power up, a reset generator 36 resets the microprocessor 30, the VIA 31, 50 microsecond pulse generator 37 and the RIOT timer 32 to initialize the microprocessor assembly. The program passes through a restart routine which by means of the three input lines 13 through an isolation transformer 38 and A/D converter 35 will determine phase rotation and store the rotation in memory for future reference.

The RIOT timer 32 will be cycling through an interrupt routine to continuously read the status of the various switches, thumbwheels, trigger optical isolator and refresh the display in a sequence programmed into memory. At this time the stick/stud switch 23 will be placed in the stud mode. During the RIOT interrupt routine, the RIOT timer 32 through switch decoder 39 will read the status of switch 23 and that information passed back through the RIOT timer and stored in memory by means of switch buffer 40. Likewise, at this time the lockup key switch 25 and pilot arc switch 26 can be set to access mode and the appropriate number of cycles and pilot arc current selected into thumbwheels 21 and 22 respectively which readings will be read and stored in memory. Thereafter, the pilot arc switch 26 will be returned to set position and then the thumbwheels 21 and 22 may be set for the main welding current cycles and current. If desired, the lockup key switch 25 may then be returned to set or lockup as previously described. The values in the thumbwheels 21 and 22 for the main welding current cycles and current will have been stored in memory as the RIOT timer reads these thumbwheels during its interrupt routine.

If a lift check is desired, the lift check switch 24 may be set to the lift check position. This switch status will be stored in memory and if the trigger is actuated, the stud welding controller will go through an entire stud welding sequence except that the pilot arc and main welding current will not be turned on.

Upon initiation of the welding cycle, the trigger is closed and this will be sensed by line pair 13 at the trigger optical isolator 27. The closing of the key switch will be read by the RIOT interrupt routine and this will be passed through the RIOT timer to memory. During the background routine to be described in more detail hereinafter in the discussion of the flow charts, the setting of the bit representing closing of the trigger will be sensed and the stud welding routine begun.

The first thing occurring in the sequence is to turn on the pilot arc current and begin lifting of the stud. The output of the three phase bridge on line pair 12 is passed through divider buffers 41 or 42 representing a high current range and a low current range respectively to the A/D converter 35. The microprocessor through the A/D converter will read the pilot arc current range from either the high current range lines or low current range lines depending on the level of current. As will be described in detail hereinafter, under the section pertaining to flow charts, the microprocessor will then sense whether the pilot arc current is sufficient to constitute a good contact and pilot arc. If not, the pilot arc current will be turned off and the stud allowed to plunge against the workpiece in a hammer fashion sufficient times to bring the pilot arc current above a predetermined level or until a predetermined number of hammer cycles have occurred after which the entire sequence will be shut down.

Firing of the SCRs is under the control of the VIA 31. As will be discussed in detail hereinafter under the section pertaining to flow charts for the program, the microprocessor will sense the closing of the trigger switch and which, in combination with a signal from Schmitt trigger 43 representing a zero cross of one of the three phases providing an initializing reference, will activate timer 2 in the VIA. Upon timer 2 timing out, a timer 2 interrupt routine is initiated which by means of the program brings line PB7 low to the 50 microsecond pulse generator 37 which provides a trigger pulse to SCR gate driver 44. At the same time, timer 1 is started and, upon timing out, starts timer 1 routine, which will be described in detail hereafter, which selects the SCR pair to be fired and which via line 45 to the SCR gate driver 44 provides the remainder of the information necessary to place the firing signal upon the appropriate pair of SCR lines 17 to fire the appropriate phase of the SCR bridge.

During the entire cycle the terminal voltage across the welding terminals is determined. This determination is made by utilization of a low pass filter 45 whose output passes to a voltage to frequency converter 46 for isolation and then through an optical isolator 47 and in turn back to a frequency to voltage converter 48 and ultimately through a low pass filter 49 to the A/D converter 35. The microprocessor in its routine will read the terminal voltage from the A/D converter and store it for future computations.

Simultaneously with the initiation of the pilot arc welding current, the microprocessor addresses and passes data to the VIA to create a signal upon line 50 to a gun solenoid drive interfacing device 51. The gun solenoid drive interface 51 creates the necessary driving current to lift and drop the gun solenoid.

As will be described in detail hereinafter in respect to the flow charts, once sufficient pilot arc current has been established, the microprocessor then continues on with the pilot arc welding sequence. After a predetermined number of pilot arc cycles has occurred, the microprocessor will read the actual pilot arc current from the A/D converter 35 and compare this current to the ideal pilot arc current which has been stored in memory. Appropriate calculations will be made in the timer 1 service interrupt routine to be described in detail hereinafter to vary the parameters for firing the SCRs in each phase to appropriately adjust the actual pilot arc current to meet the ideal pilot arc current. After the predetermined number of pilot arc cycles stored in memory has been achieved, the microprocessor program passes into the main welding cycle.

During the main welding cycle and after a predetermined number of cycles have occurred, the microprocessor will reset and control the VIA for setting of timers and firing of the SCRs as described in respect to the pilot arc current. Additionally, during the timer 1 routine, calculations will be made respecting the actual weld cycle current during each phase which will be added to an average and the average-compared to the ideal weld current stored in memory. Appropriate calculations will be made, as hereinafter described in regard to the flow diagrams, to adjust the firing parameters of the SCRs to bring the main welding current in conformity with the ideal welding current. Additionally, by utilization of the terminal voltage parameters together with the actual welding current and the number of cycles of current which have passed, the microprocessor will compute the actual weld energy. This will be compared to the ideal total weld energy desired and if required, appropriate adjustments will be made to extend the number of main welding cycles to a given percentage to bring the total weld energy into conformance with the ideal total weld energy. At the end of the weld cycle, the total weld energy and other parameters will be compared to the ideal weld parameters and different error codes set up depending on the degree to which the ideal parameters were achieved.

During the main welding sequence, a counter will control the time at which the microprocessor through the VIA directs the gun solenoid drive interface 51 to drop the gun solenoid. Additionally and as will be described in detail hereinafter, the weld sequence is set for hot plunge and the welding energy will be maintained on for approximately six cycles after contact of the stud with the molten pool of metal. These latter six cycles are not taken into the calculations performed by the microprocessor for total energy.

The stud welding controller and microprocessor routine includes a safety feature known as the chuck saver circuit which will prevent retriggering of the stud welding gun until the stud welding gun chuck has been withdrawn from the stud. This is to prevent the obvious burning of the chuck against the stud. This is accomplished by means of control lines 52 and 53 into and out of the VIA and a chuck saver interface 54. A 15 volt input 55 to the chuck saver together with a connecting line 56 to the welding terminals provides a signal indicative that the stud and chuck are still engaged. This is sensed in the appropriate part of the microprocessor routine through the VIA and an appropriate bit set to prevent retriggering until the connection between stud and workpiece has been broken.

An override protection circuit 58 is provided which, upon the occurrence of certain conditions, will pull the main breaker cutting power from the welding apparatus. This condition occurs whenever the voltage upon the welding terminals is greater than 10 volts and line 57 to the override circuit 58 is inactive indicating an absence of welding, i.e. no closed trigger and SCR trigger pulses. The override circuit 58 is a protection against accidental energizing of the stud which could occur under such conditions as a broken-down or shorted SCR.

The stud welding controller assembly VIA line 61 and a gun sensor optical isolator 60 is able to determine whether an error has been made in that the stud welding gun cable or stick welding cable is inserted into the wrong receptacle. The receptacle on the welding apparatus for the stud welding gun includes a cam lock which provides a signal when a welding cable has been engaged with the terminal for the stud welding gun. The microprocessor will check the stick/stud switch and compare this to the status of the cam lock switch as reflected through the gun sensor optical isolator 60 and determine the mismatch. If there is a mismatch, an appropriate error signal will be generated and the equipment rendered inoperative until the proper match is completed.

At the end of the welding cycle, the microprocessor will have stored in memory the parameters of pilot arc welding current, number of pilot arc weld cycles, main welding current, voltage and number of cycles and also the computation of the total weld energy. The RIOT timer routine will service the display select 20 and appropriately retrieve from memory and display in display 28 by means of digit decoder 57, digit driver 58 and segment driver 59 the selected information in the display. Additionally, upon the occurrence of any error, the RIOT timer routine will alternately display the error number together with the parameter selected in the display select.

- In the stick welding mode, the stud welding controller microprocessor assembly will automatically go to the routine for controlling of welding current bypassing the pilot arc and hammer routines as will be described hereinafter in greater detail. During the stick welding cycle, an initial number of cycles will be ignored to provide for arc stabilization. Thereafter, the timer 1 routine will ascertain the phase current and average the phase current with sixteen prior phases and compare the current to that stored in memory from the current thumbwheel 22. Appropriate calculations will be made by the microprocessor to direct the VIA to control the SCR firing to bring the stick welding current into conformity with that selected. As will be described in detail hereinafter as respects the flow charts, at any time the welding current drops below a predetermined value indicating extinguishment of the arc or imminent extinguishment, then the welding controller will shut down the welding sequence. At the end of welding, the only display that will occur will be the average weld current that was calculated.

II. Schematic diagrams

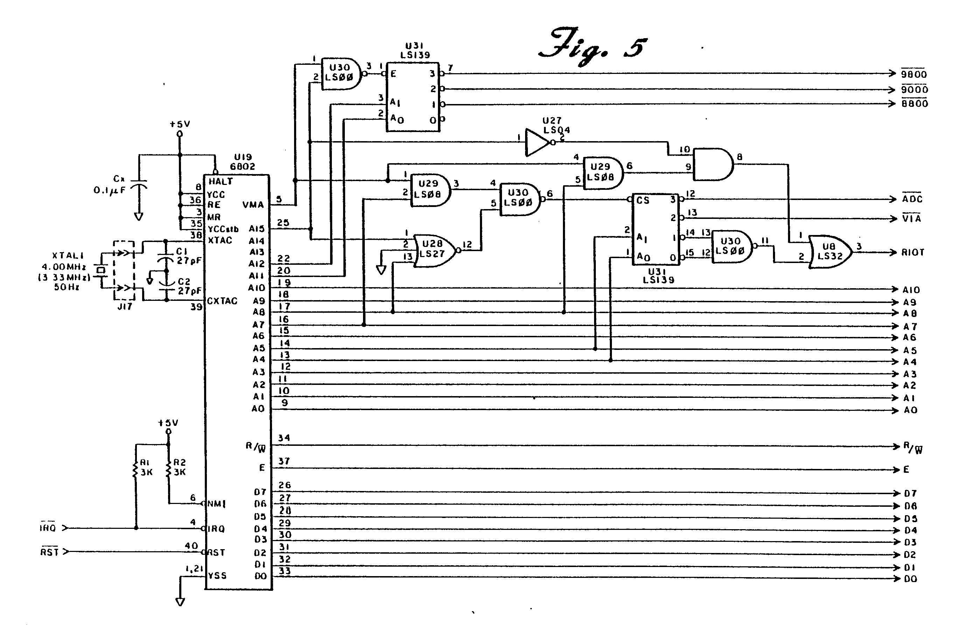

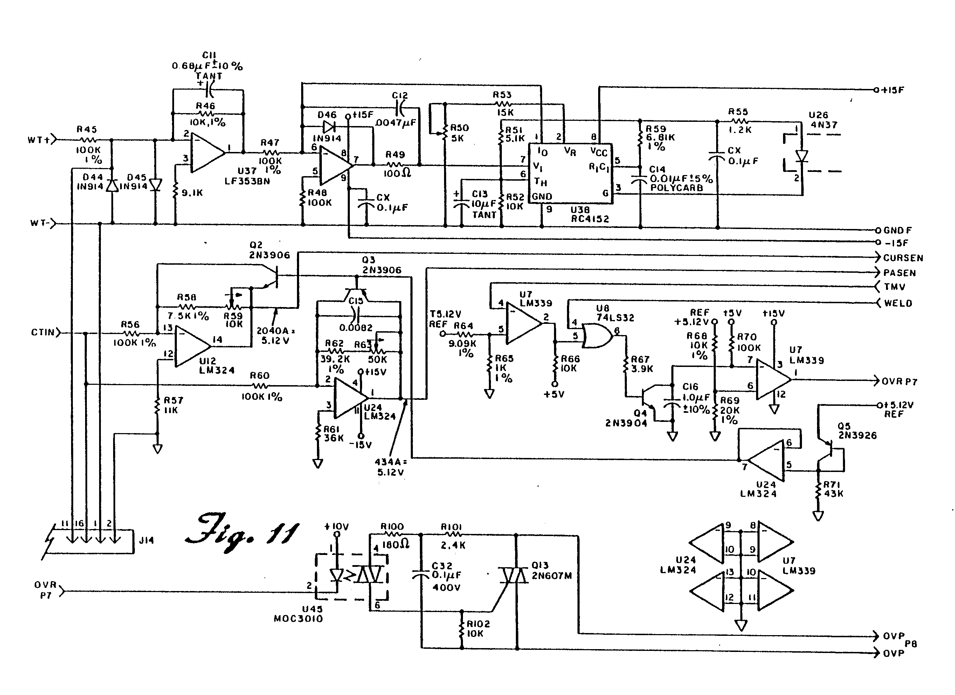

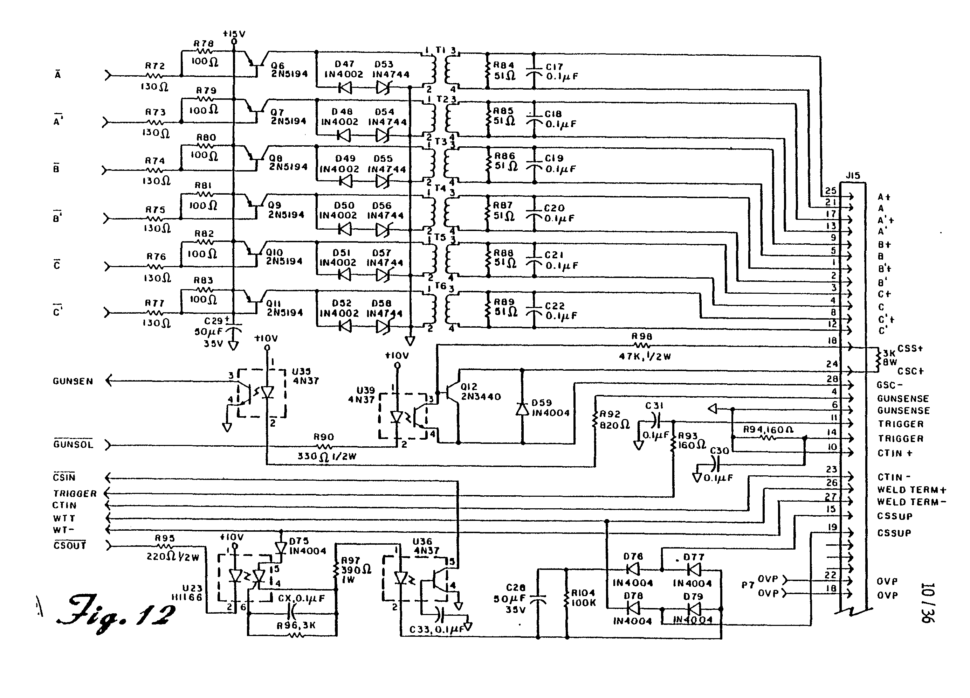

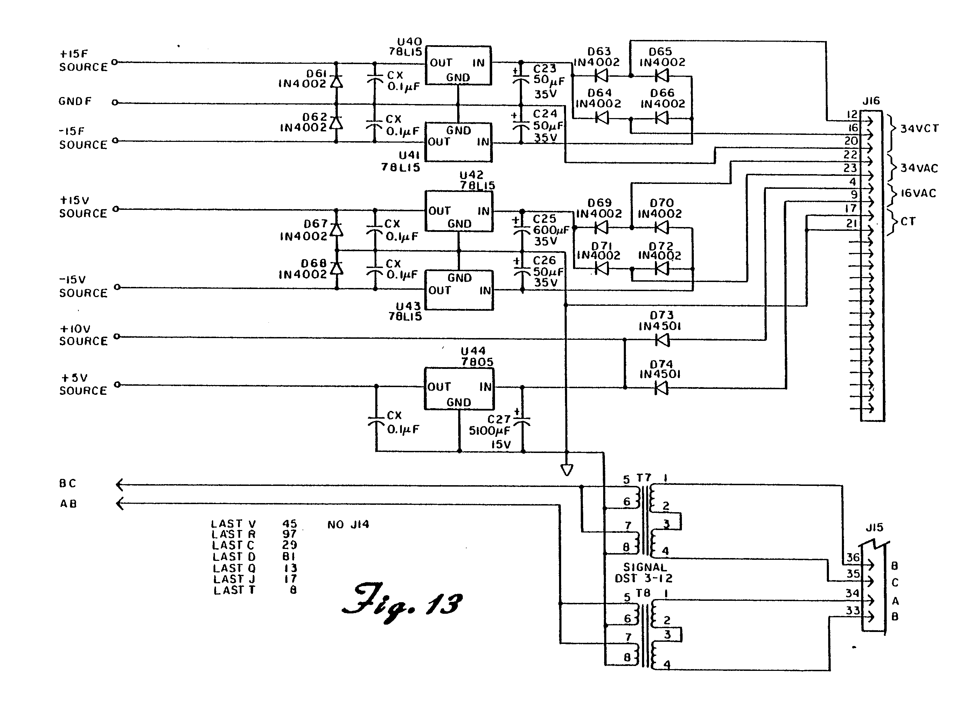

Set out in the drawings in Figures 3—13 are the schematic diagrams heretofore referred to and which present the detailed wiring to and from the various components of the microprocessor assembly illustrated in the block diagrams of Figures 1 and 2. Additionally, these schematics illustrate the pin designations for each of the various components and also the logic incorporated between the various devices. It is not believed necessary that a detailed explanation of the schematics is necessary in view of the explanation of the function of each of the blocks as shown in Figures 1 and 2 which can be readily identified in each of the schematics set forth in Figures 3—13.

III. Flow charts

A. In General

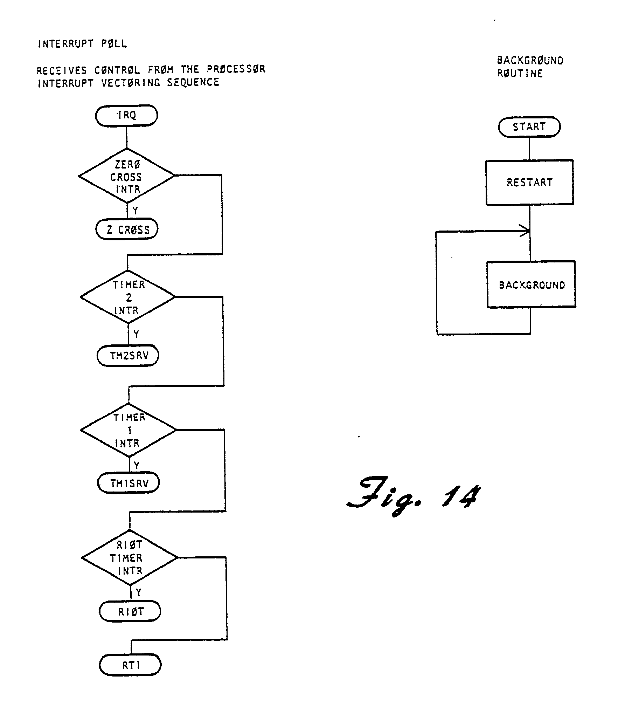

Set out in Figures 14—37 of the drawings are the flow charts which depict the steps which the computer program executes in the data processing carried forth in the subject invention. Following hereinafter is a flow chart table or listing depicting the different routines and sub-routines involved. A brief summary or description of the function of each of the routines or subroutines will be undertaken in the subsections which follow. A greater definitive understanding of any particular routine or subroutine may be had by a thorough review of the specific routine itself taken in conjunction with the assembled program which follows in section V hereinafter.

For a basic understanding of the interrelationship of the restart routine, background routines and interrupt routines with one another, reference should be made to Figure 14 of the drawings. As will be explained more fully hereinafter, the restart routine includes a self-check which, if successfully completed, moves into the background routine. The background routine, as may be seen from Figure 14, is a continuous loop back to itself which processes various states such as pilot arc and main welding current unless there is an interrupt to the microprocessor of the nature shown in the left-hand side of Figure 14.

| Flow chart table | Figure |
|---|---|
| (1) Restart routine | 15 & 16 |
| (2) Background | |
|    (a) Start | 17 |
|    (b) State 0 initialization for weld | 18 |
|    (c) State 1 pilot arc initialization | 18 |
|    (d) State 2 end of pilot arc | 19 |
|    (e) State 3 dummy state | 19 |
|    (f) State 4 main weld sequence | 20 & 21 |
|    (g) State 5 hot plunge | 21 |
|    (h) UPDCYC | 23 |
|    (i) State 6 end of stud weld | 22 |
|    (j) State 7 hammer termination | 22 |
|    (k) STKRTN stick weld | 24 |
|    (l) DSPFMT display format | 25 & 26 |
| (3) Interrupts | |
|    (a) Zero cross-service interrupt | 27 & 28 |
|    (b) Timer 2 service interrupt | 29 |
|    (c) Timer 1 service interrupt | 30 |
|       (1) Detail 1—compute regulated base phase angle | 31 |
|       (2) Detail 2—sample Avg, get next SCR pair | 32 |
|       (3) Detail 3—compute adjustment | 33 |
|       (4) Detail 4—compute change | 34 |
|       (5) Detail 5—store change in timers | 34 & 35 |
|    (d) RIOT timer | 36 & 37 |

B. Summary of flow charts

(1) Restart:

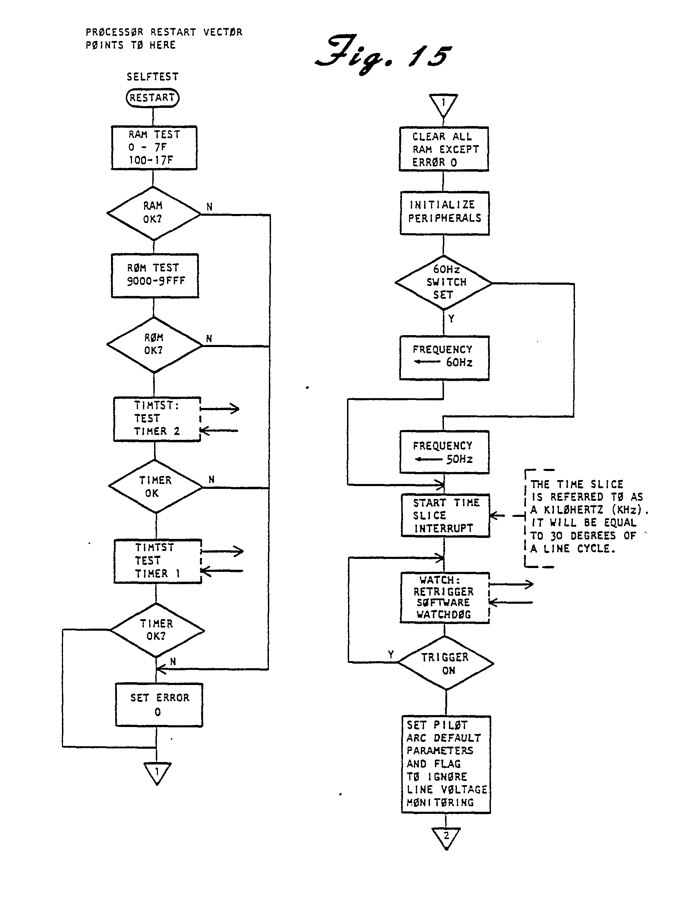

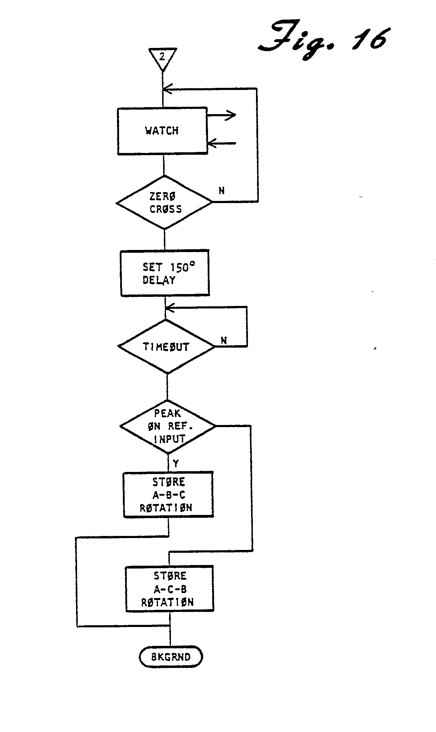

The restart routine is shown in Figures 15 and 16 of the drawings. In general, the restart routine checks all of the operable components such as the ROM, RAM, checks for line voltage frequency and initializes the peripherals such as the VIA and RIOT. Additionally, pilot arc parameters permanently stored in the memory are set in the event that the operator has not set alternate parameters. Further yet, the phase rotation of the incoming power is sensed and set. If àll tests are successfully completed, the restart routine moves on the background routine.

(2) Background:

(a) Start:

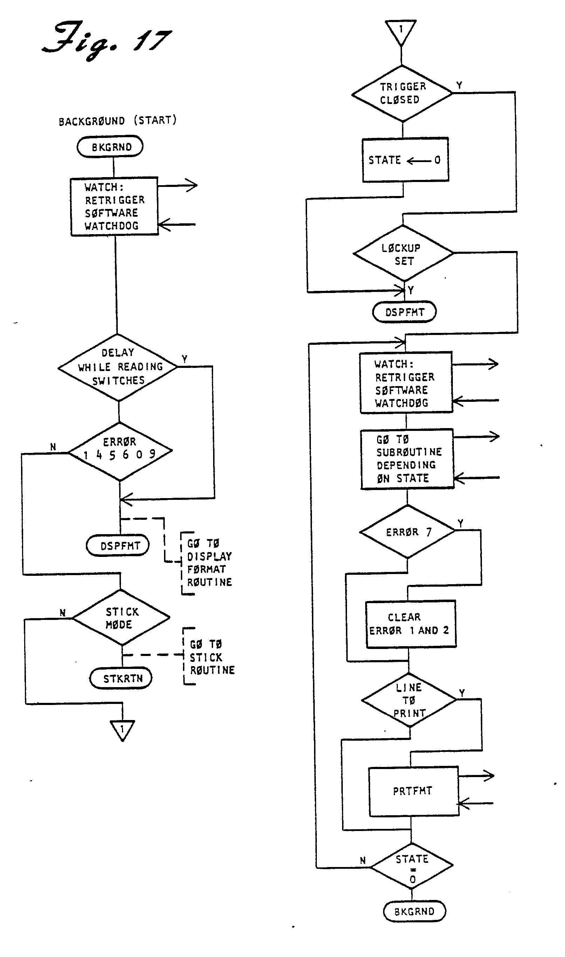

The start routine is shown in Figure 17 of the drawings. The start routine is one of many consecutive routines in the primary background loop through which the microprocessor will continue until the presence of an interrupt. During the start phase of the background routine and as shown in Figure 17, the program is checking the setting of all switches and determining the presence of errors. Additionally, the major determination is made as to whether the program is to continue in the stud welding mode or through the stick routine (STKRTN). Any faults or errors are displayed through the display format.

If the trigger is not closed, the program sets the state to zero and goes to display format. If the trigger switch is closed, the background start routine goes to a subroutine known as "watch". The watch subroutine sets the reset generator to zero or initial timing to avoid timing out of the reset generator that would reset the entire system upon timing out. The reset generator is a built-in safety precaution which provides a reset signal after a predetermined time, the expiration of which would indicate such factors as the processor being unable to continue the proper execution of its program. Following the exercise of the watch subroutine and while in stud welding mode, the program proceeds to a state subroutine depending upon the state set. There are eight states, as will be hereinafter explained. The program will execute a given state and return from subroutine. If the program has set the next state to other than zero, the program will return to subroutine "watch" and then the next state subroutine. Otherwise, the program will return to background start.

(b) State 0 (initialization for weld):

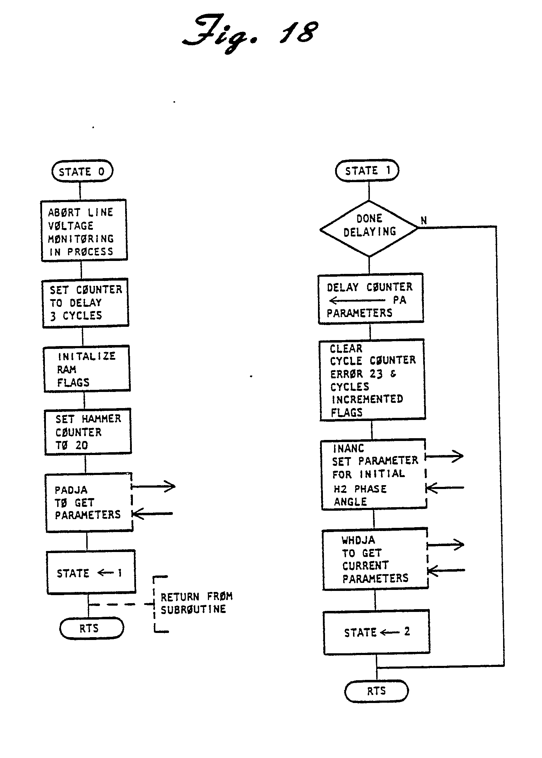

The state 0 or initialization for stud weld subroutine is shown in Figure 18 of the drawings. During this subroutine, such functions as initializing all RAM flags is accomplished and the hammer circuit counter is set to 40. Additionally, the ROM table is consulted together with the weld current settings and an initial SCR firing angle computed for beginning of the welding current. Thereafter, the state counter is incremented by 1 and the program advanced to the next state which, in this case, would be state 1.

(c) State 1 (pilot arc initialization):

The state 1 or pilot arc initialization subroutine is shown in Figure 18 of the drawings. In this subroutine, the pilot arc parameters of pilot arc current and number of cycles are set. Thereafter, the program moves to state 2.

(d) State 2 (end of pilot arc):

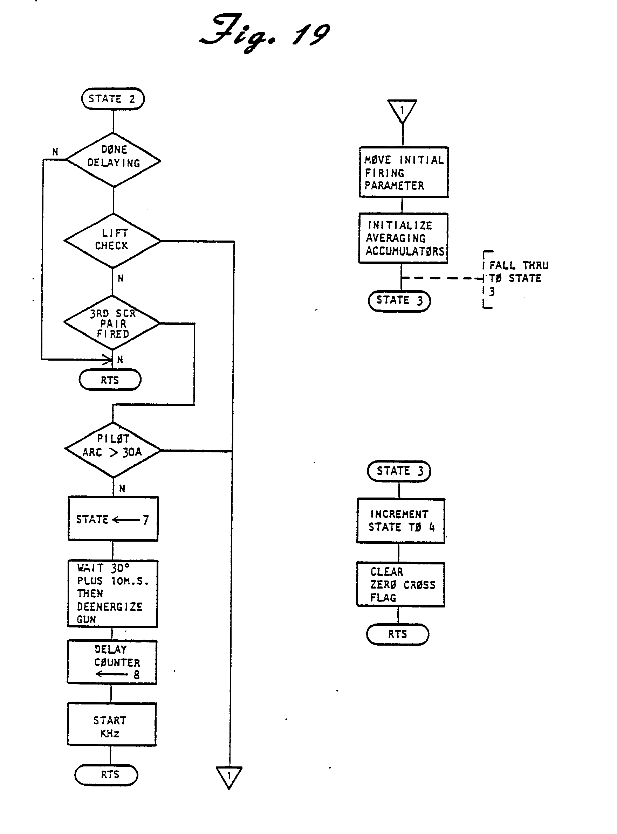

The state 2 subroutine or end of pilot arc routine is shown in Figure 19 of the drawings. If the switches are in the lift check mode, the program progresses on through the remainder of the sequence utilized in a complete welding cycle. If lift check is not enabled, then the program will see if the pilot arc cycle has reached the required number of cycles stabilizing the current and, if not, will return from subroutine. Otherwise it will loop back until the third SCR pair has been fired. Once the third SCR pair firing has been sensed, the program continues to determine if the pilot arc is greater than 30 amps and, if so, continues through the program placing in appropriate memory the initial firing parameters and initializing averaging accumulators preparatory to main welding current calculations. If the pilot arc current was less than 30 amps indicating a fault condition, state 7 is set and the program proceeds through the functions as shown in Figure 19 to the return from subroutine and state 7. State 7 is the hammer circuit operation routine, which, upon completion, initially returns to state 0 as will be illustrated in the discussion of state 7.

(e) State 3 (dummy state):

State 3 shown on Figure 19 is a dummy state which essentially increments the state counter to state 4 and moves ahead into the program.

(f) State 4 (main welding sequence):

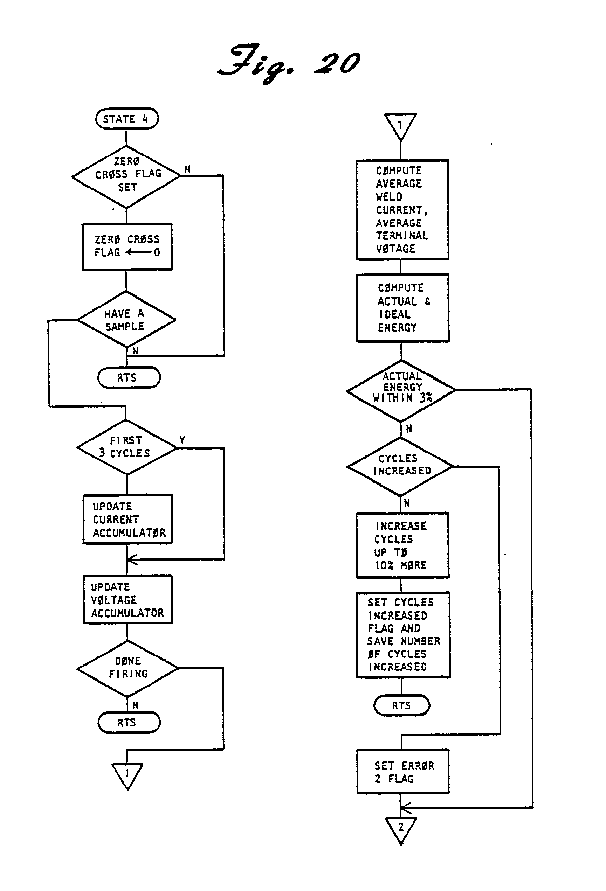

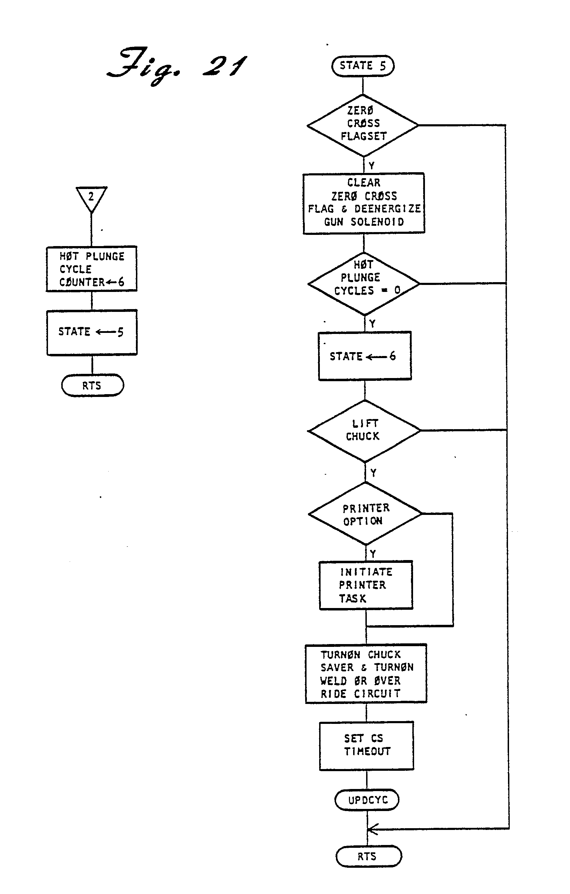

The main welding sequence set forth in state 4 is shown in Figures 20 and 21 of the drawings. In the initial part of state 4, the program seeks to determine whether or not the service interrupts are firing the SCR's and computing the current and voltage. When this begins, the program progresses through updating the current accumulator and voltage accumulator once per cycle until firing is done. Thereafter, the main weld sequence program computes the average weld current and average terminal voltage and further computes the actual energy. Next, the actual energy is compared to the ideal energy and if within three percent of the ideal energy, moves through the program setting the hot plunge cycle counter to 6 to permit the hot plunge following deenergization of the gun solenoid to continue for a period of 6 cycles. The state counter then is incremented to 5.

At the end of the weld, the energy is checked. If it is less than 97% of the ideal welding current, the number of cycles is increased by the percentage that the energy was low up to 10%. When these additional cycles are completed, the energy is checked again. If it is still less than 97%, then an error 2 flag is set. In any case, the weld is terminated after the second check.

(g) State 5 (hot plunge):

State 5 for the hot plunge subroutine is shown in Figure 21. This subroutine waits for setting of the zero cross flag and, when set, clears the zero cross flag, deenergizes the gun solenoid and then proceeds to loop until the hot plunge cycles equal 0 whereupon the state counter is set to 6. Thereafter in the routine the lift check flag is checked and if set, returns from subroutine, and state 6. If the lift check flag is not set, the routine then checks for the presence of a printer option and, if present, initializes the printing routine (not shown) and thereafter, turns off the weld override circuit while immediately thereafter turning on the chuck saver output. After a predetermined time, the chuck saver output, which applies a gating pulse to an SCR, is terminated. The SCR continues conducting until disengagement of the stud with the workpiece. As long as the SCR is conducting, the program will not continue past the point of waiting for the stud to be disengaged. The routine then proceeds into the subroutine of UPDCYC to be described immediately following.

10

# 0 073 818

(h) UPDCYC routine (update cycles):

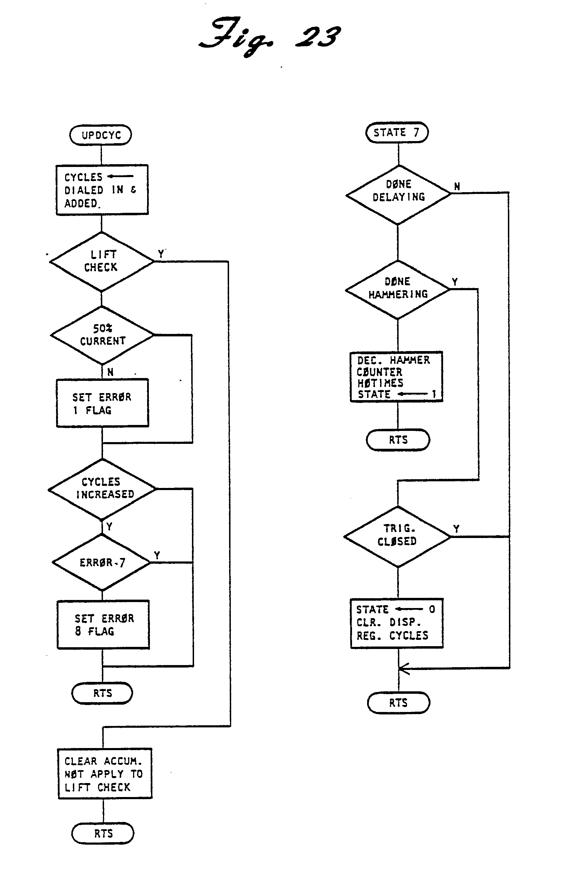

The UPDCYC update cycle subroutine is shown in Figure 23. In this subroutine the dialed in number of weld cycles plus any incremented cycles are added together and placed in memory for future reference. Thereafter, the routine checks to see if the lift check bit is set and, if so, proceeds on to clearing all accumulators not associated with the lift check and returns from subroutine. If the lift check bit is not set, then the determination is made if fifty percent of current was achieved and, if so, this determination coupled with cycles increased will set an error 3 flag providing that an error 7 flag has not been set. If fifty percent current was not achieved, then an error 1 flag would be set. As respects the determination of parameters for each of the error flags, attention is directed to the error code chart under section V following.

(i) State 6 (end of stud weld):

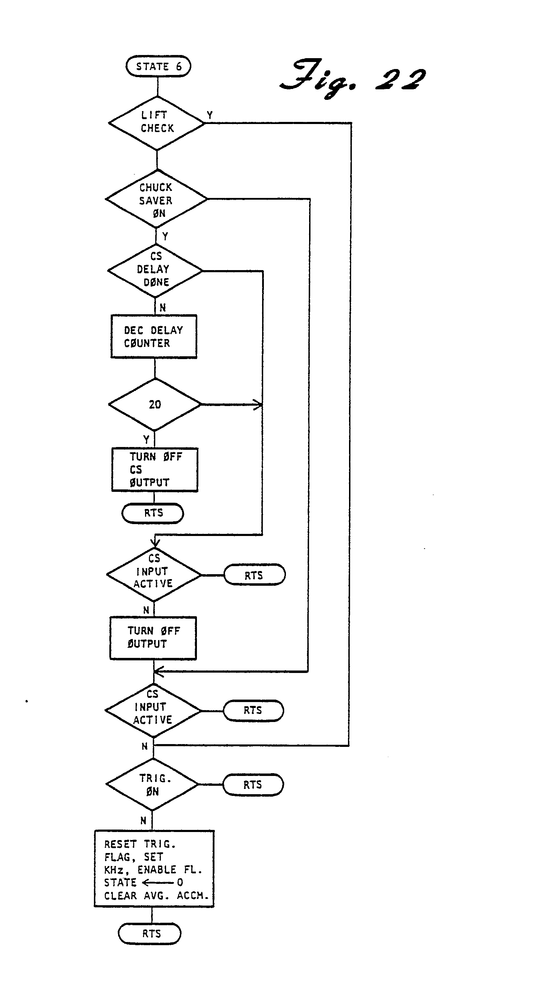

The state 6 subroutine or end of stud weld routine is shown in Figure 22. Again the lift check bit is checked and, if present, the program proceeds to determine whether the trigger has been released. If not, the program loops back until the trigger is released and thereafter resets the trigger flag to permit repeat of the trigger cycle. If the lift check bit is not set, the remaining flow paths in state 6 essentially determine whether the chuck saver input signal has terminated and if not, delays until such has occurred. The routine further determines whether the output signal across the stud and workpiece has terminated and, if not, delays until such happens and ultimately when the output signal has ceased, indicating that the chuck has been pulled from the stud, turns off the chuck saver output signal and thereafter, returns from subroutine. The termination of state 6 will set the state counter to 0 returning to the main background loop.

(j) State 7 (hammer termination):

State 7 or the hammer termination subroutine is shown in Figure 23. State 7 is reached through one branch of state 2 shown in Figure 19 wherein the pilot arc current is less than 30 amps indicating the need of the hammer action. The subroutine checks for the passage of an initial delay period following deenergizing of the pilot arc which occurs in state 2. Following the delay period, the routine proceeds to decrement the hammer counter by 1 each loop and resets the state counter to 1 to return through states 1 and 2. In these states the gun solenoid is energized and deenergized creating a hammer action until either the pilot arc senses greater than 30 amps as shown in state 2 upon which the normal welding procedure continues or a count of 20 hammer actions has been reached at which point "done hammering" will have been determined as yes and the routine branched to determine whether the trigger is closed. If the trigger is closed, the routine will loop until the trigger is open. Once the trigger is opened the state counter will be set to 0 and routine returned to state 0 at which, upon closing of the trigger, another attempted weld cycle could be commenced.

(k) STKRTN routine (stick weld routine):

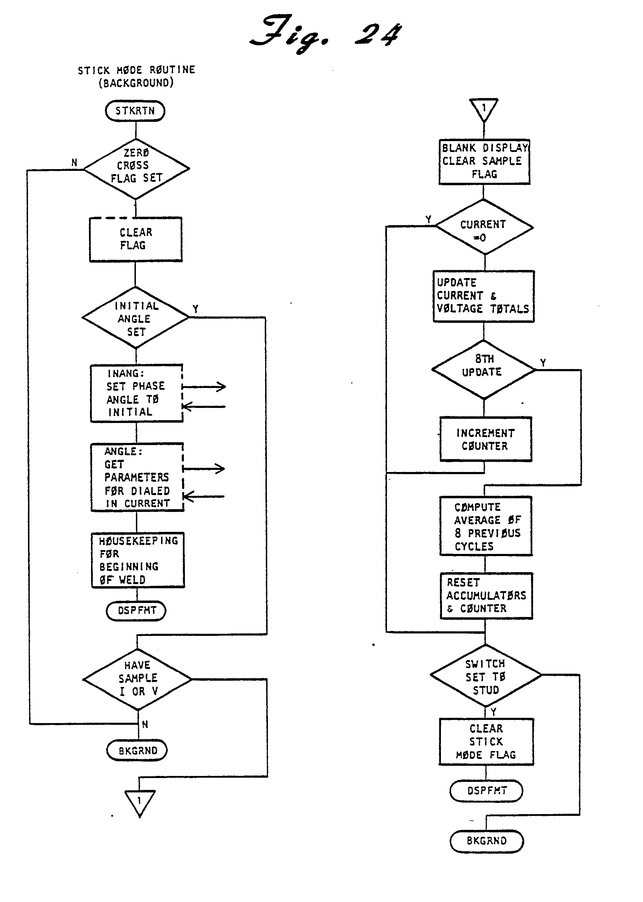

The STKRTN or stick weld routine is shown in Figure 24. In the stick routine, the routine will continuously loop until a zero cross flag has been set. Thereafter, the flag is cleared and a determination made whether the initial phase angle has been set. If not, the INANG routine is called which goes to a ROM table to set the initial phase angle and the ANGLE routine is undertaken to get current parameters. A housekeeping routine in the nature of clearing the accumulators, etc. is undertaken. The routine then passes into the display format (DSPFMT) routine which will be described hereinafter and after which having passed through will return to the beginning of background and ultimately loop back to the stick routine to the point of determination of zero cross flag.

Having determined that the initial angle is set, the routine branches through determination of a sample having been received and will loop until such has been received. After determination of the sample, the display will be blank and the sample flag cleared. A determination will be made if the current equals 0 or if the current has not continued through 8 phases, whereupon then the routine will continue back around to background. Once the eighth update phase has been sensed, the averages of the voltage and current in the eight previous cycles are computed and the accumulators and counters reset to again recompute a following eight cycles.

In the event the stick/stud switch has been changed to stud during the routine, this will be determined and the stick mode flag cleared and the routine passed into display format routine. The display format routine, as to be described hereinafter, will convert the display select thumbwheel setting from binary coded decimal to binary and set up the display buffers in accordance with the type of information desired to be displayed and as set in the thumbwheel.

(l) DSPFMT routine (display format routine):

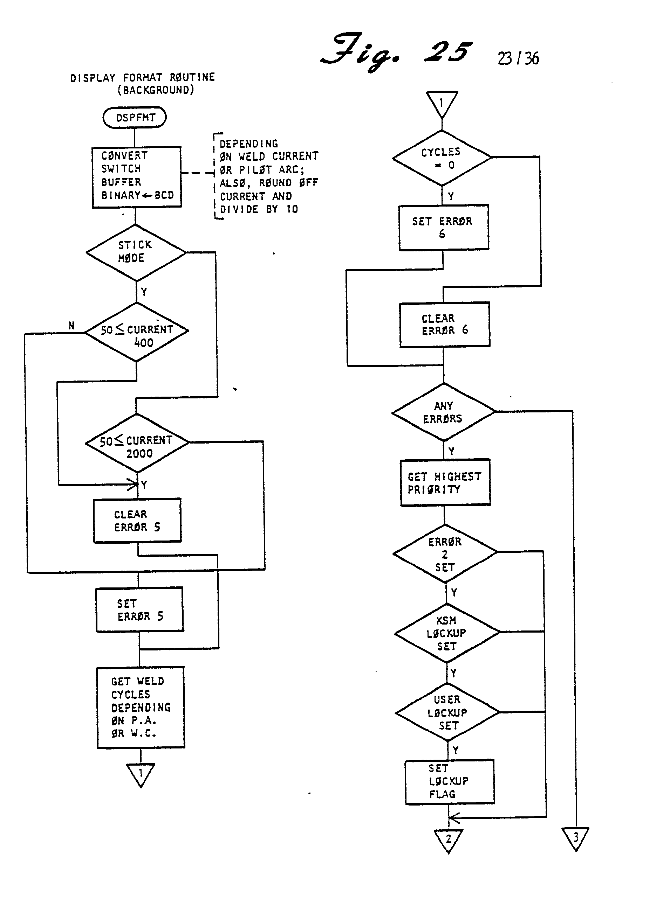

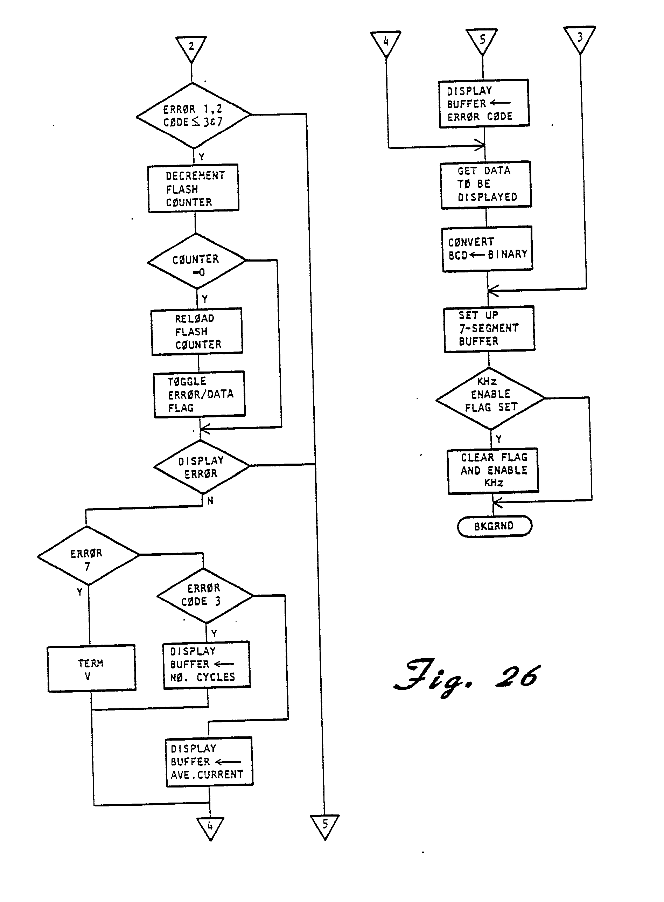

The DSPFMT or display format routine is shown in Figures 25 and 26 of the drawings. This routine is undertaken at many points in the various states and routines described hereinbefore. Essentially, the display format routine checks for thumbwheel parameters, checks and displays errors and selects errors upon a priority and also converts the display thumbwheel selector from binary coded decimal to binary in order to set up the display buffers to display the type of information desired to be displayed, i.e. current, voltage, cycles, watt seconds, pilot arc current, pilot arc cycles and output current voltage.

11

In the initial part of the routine, depending on whether the switch has been set for stick or stud welding, a determination is made whether the thumbwheels are set within parameters, i.e. stick welding greater than 50 amps and less than 400 and stud welding greater than 50 amps and less than 2,000. If not within the parameters, an error 5 signal is generated. Additionally, the cycle thumbwheel is checked to determine if within parameters, i.e. a setting of greater than 0 and, if not, an error 6 signal is set. If there are no errors, the routine proceeds to set up the seven segment buffer which corresponds to the seven segments of the front panel light emitting diode displays, and checks to see if the enable KHz flag is set and, if so, clears the enable flag and enables the KHz interrupt and, in any event, returns to background.

In the event of the occurrence of one or more errors, the routine determines from a priority table the highest priority error. Error codes 1, 2, 3 and 7 and the associated data with the error code will be alternately displayed in the display. A flash counter is decremented to set a toggle error/data flag which is interpreted in the routine at the "display error" question point to create alternate branches (5) or (4) for the alternation of data and error respectively.

(3) Interrupts:
(a) Zero cross interrupt service routine:

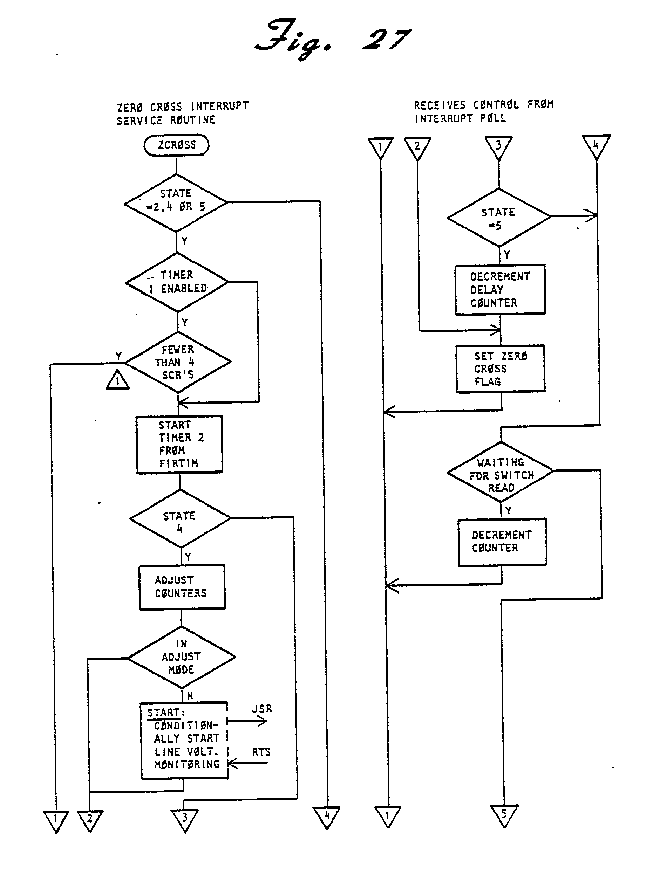

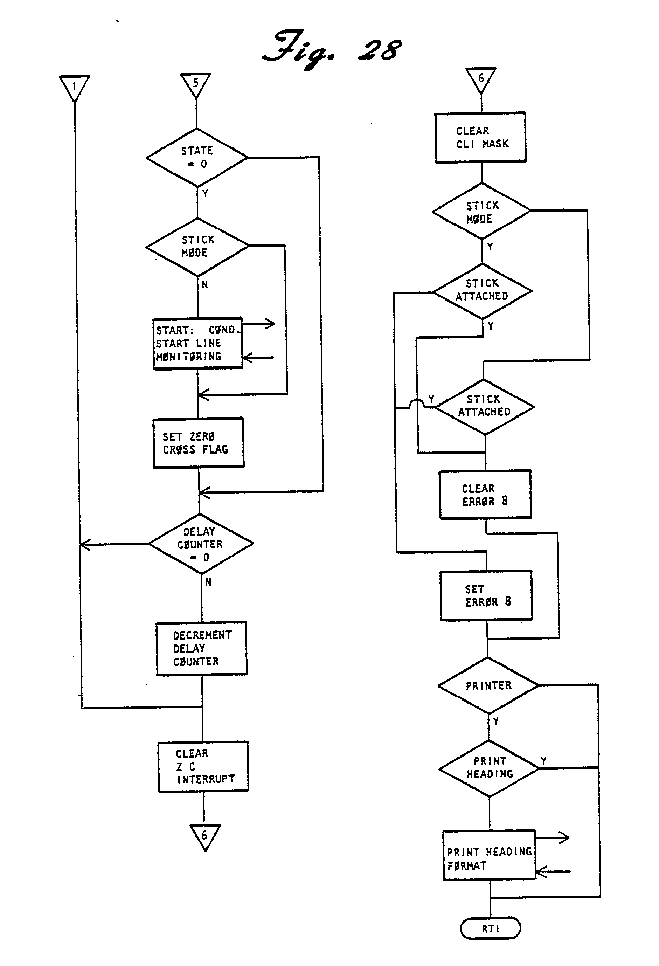

The zero cross interrupt service routine is shown in Figures 27 and 28. In summary, this interrupt routine determines whether or not the background routines are in state 2 (pilot arc state), state 4 (main weld sequence) or state 5 (hot plunge) during which current regulation, computation and measurement is to take place or in the remaining states in which no such computations, adjustments or the like takes place. Looking to Figures 27 and 28 and assuming that the background is in a state other than state 2, 4 or 5, the routine proceeds to the decision of "waiting for switch read" which delay is occurring in the background (start) which, if still delaying, will decrement the counter for 20 zero crosses to provide time for reading of all of the conditioned switches. If not waiting for reading of the switches, the program proceeds to determine whether the background routine is in state 0. If in state 0, the determination is made if in stick mode and, if not in stick mode which means in stud mode, then the subroutine of conditionally checking line voltage is undertaken and the zero cross flag is set. The routine checks to see if the delay counter utilized in the various states has been set to 0 and, if not, decrements that counter and in subsequent passes through the zero cross routine, will continue to decrement the delay counter until the 0 condition exists. Thereafter, the zero cross interrupt is cleared followed by clearing of the interrupt mask. The clear interrupt enables any pending interrupt from other sources to occur from this point on because none of the following events are time critical and a pending interrupt might be time critical.

The next portion of the zero cross routine continuing from point 6 is to determine a safety feature to prevent confusion of the stud cable and stick cable being reversed and placed in the wrong terminal. If such condition occurs, an error 8 flag is set; otherwise it is cleared.

The remainder of the routine deals with the printer option. If a printer option is included in the apparatus, a check is made one time to see whether the print heading is then made available in the printer buffer for access in the printer. Thereafter, other prints of the data will occur through portions of the KHz interrupt service routine.

In the zero cross routine and in the condition of a 2, 4 or 5 state (the stick routine through housekeeping has a state 4 value set for this routine purpose) and if timer 1 (to be discussed hereinafter) has not been enabled, then timer 2 will be started. Timer 2 routine, to be described hereinafter, generally starts the SCR firing and computations respecting firing adjustments to regulate current. If timer 1 is enabled, as hereinafter described, a test will be made to whether fewer than 4 SCRs have fired indicating a spurious zero cross under such conditions. If so, the routine is essentially terminated through path 1.

Following initiation of timer 2, the zero cross routine determines whether or not a state 5 condition exists via path 3 and, if so, the state 5 counters (hot plunge) are decremented and the zero cross flag set to ultimately count out the required cycles or time for the hot plunge state 5 routine.

If the zero cross routine occurs during a state 2 condition via path 3 onto path 4, the routine will essentially proceed as heretofore described decrementing the delay counter for the pilot arc state 2 mode.

If the zero cross service routine is occurring during state 4, then the cycle counter is in the state 4 main welding sequence state and will be decremented each time the zero cross interrupt routine occurs. Additionally, the determination will be made whether or not the state 4 is in the adjustment mode which occurs in the stud welding mode. If so, the routine sets the zero cross flag and moves on out of the routine as heretofore described. If in the nonadjusting mode, meaning that the state 4 flag has been set in the stick mode, then the routine will conditionally start line voltage monitoring and pass on out of the routine in the same manner.

(b) Timer 2 interrupt service routine:

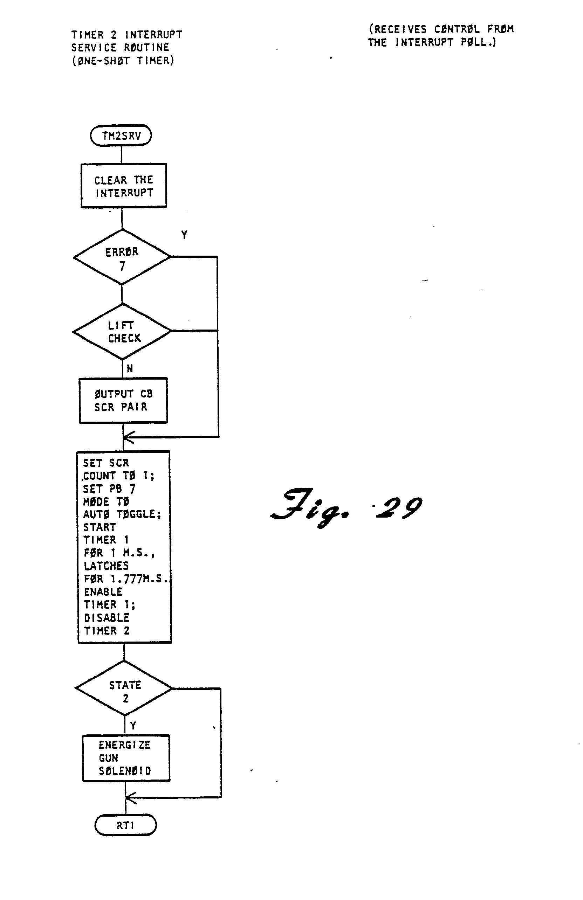

The timer 2 interrupt service routine is shown in Figure 29 of the drawings. It is to be recalled that timer 2 was started in lhe early portion of the zero cross routine and set for a predetermined time that was fetched from memory (FIRTIM). This initial setting of timer 2 at the beginning of the welding cycle is a number dependent on the ideal current desired and determining the initial base phase angle used and thereafter a value is calculated in the timer 1 routine as will be described hereinafter. Upon initiation of the timer 2 interrupt routine, upon timing out of timer 2, the routine interrupt flag is cleared and, if not in the lift check mode or an error 7 flag present, the first SCR pair is fired.

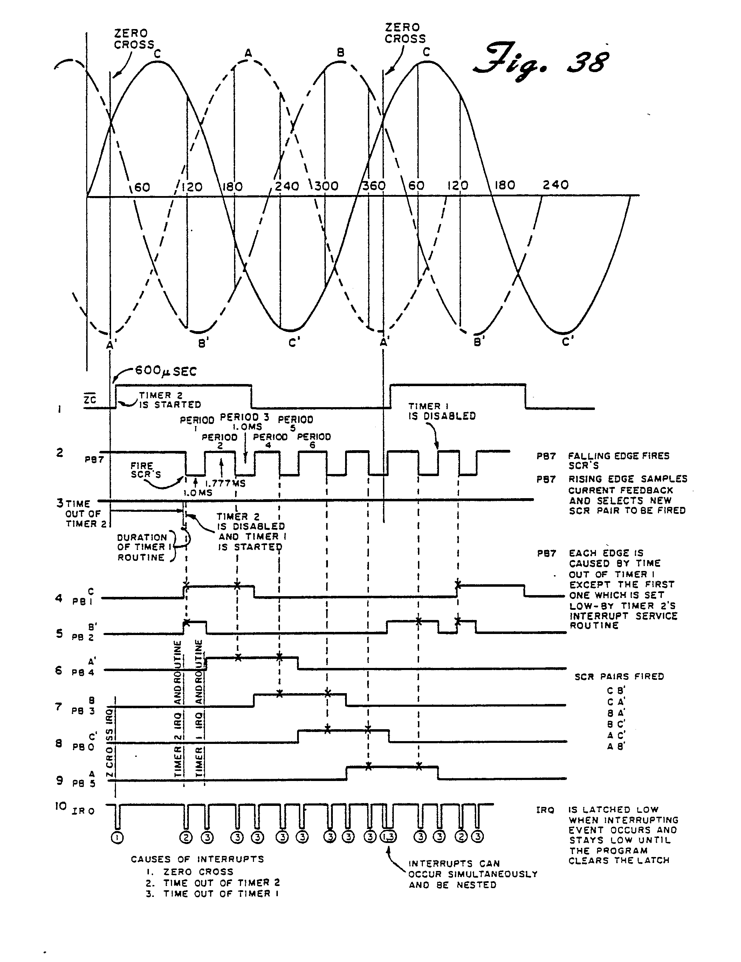

The routine initializes the SCR count to keep control of the pairs fired. Additionally, line PB7 to the 50 microsecond pulse generator is set. The versatile interface adapter (VIA) is set to the auto toggle mode for the PB7 output to the 50 microsecond pulse generator firing the SCRs. The VIA has the capability of toggling line PB7 alternately high and low for a time duration between the toggling controlled by the time set in timer 1 and the latches of timer 1. The PB7 output is toggled low for one millisecond and the timer 1 latch set for 1.777 milliseconds which totals a time period equal to the time estimated for the beginning of the next phase. This toggling action will continue throughout the remaining phases under the timer 1 interrupt service routine to be described hereinafter and in conjunction with the timing diagram of Figure 38. Additionally, timer 1 is started and timer 2 is disabled.

At the final termination of the timer 2 interrupt service routine, the routine checks to see if the background program is in pilot arc state 2 and if so, energizes the gun solenoid lifting the stud and beginning the initiation of pilot arc.

(c) Timer 1 interrupt service routine:

Before proceeding with the flow diagrams depicting the program involved in the timer 1 interrupt service routine, reference should be made to the timing diagram of Figure 38 which will facilitate an understanding of the flow diagrams. Referring to Figure 38, there is illustrated at the top portion of the drawing the typical three phase wave form as seen by the SCRs in the SCR bridge.

All of the timing diagrams in Figure 38 are referenced to the zero cross line. It is to be recalled that the zero cross interrupt service routine begins when the difference between a selected pair of phases of the three phase power supply is equal to zero. The Schmitt trigger shown in Figure 2 of the drawings which generated the zero cross interrupt has an internal hardware delay of 600 microseconds following the true zero cross before the interrupt is generated. As discussed in the zero cross interrupt service routine, and as a part of that routine, timer 2 is conditionally started upon the occurrence of the zero cross interrupt service routine. Thus, since there is the 600 microsecond delay following true zero cross, timer 2 is started 600 microseconds from true zero cross as shown in Figure 38. Each time a zero cross occurs, and as shown in Figure 38, timer 2 is again conditionally restarted.

As previously discussed in the zero cross interrupt service routine, when timer 2 is started, the program initially recalls from memory an initial time to set into timer 2 (FIRTIM). Timer 2 must time out for the amount set in the timer and adjusted in the timer 1 interrupt service routine before an interrupt occurs. When the interrupt occurs upon timer 2 timing out, as shown on line 3 of Figure 38, then the timer 2 interrupt service routine begins.

The timer 2 interrupt service routine occurs within the time required to execute the instructions set forth in the timer 2 interrupt service routine shown in Figure 29. Essentially during this interrupt service routine, and as previously discussed, the SCR output pair C-B' is chosen, the SCR count is set to 1 and line PB7 is set to low as shown on line 2 firing the SCRs for the first pair.

Additionally during the timer 2 interrupt service routine and as previously discussed, the VIA timer 1 is set to automatic toggle which will toggle automatically between high and low states each time timer 1 counts down to zero. Perhaps a note regarding the operation of the VIA is in order here. When the VIA timer 1 counts down to zero, it is automatically reloaded from the timer 1 latches, which should have previously been initialized. Also, in the PB7 toggle mode when timer 1 is loaded from any source, PB7 is automatically toggled. The typical sequence during regulation is: (a) on falling edge interrupt, reload latches for 1.777 ms.; (b) on rising edge interrupt, disable toggle mode, read timer, adjust time, write to timer, enable toggle mode and reload latches for 1.0 ms. Initially, in the timer 2 interrupt service routine, timer 1 which is toggling line PB7 is set for 1.0 milliseconds and the latch is set for 1.777 milliseconds which will be the time until the next toggle to the high state. Simultaneously, timer 1 is initiated to begin its time out and timer 2 is disabled. Upon timer 1 timing out, an interrupt signal is generated as shown on line 10 of Figure 38 thus initiating the timer 1 interrupt service routine. At this point, the timing will have proceeded 1.0 milliseconds past the firing of the initial SCR pair and PB7 line (line 2 of Figure 38) will be on the rising edge.

As will be described in detail hereinafter during the timer 1 interrupt service routine, the current will be sampled during the rising edge of PB7 and this value stored. During the initiation of the welding cycle as shown in Figure 38, there will have been no prior calculations of the firing angle and timer 1 will automatically time for 1.777 milliseconds before PB7 falls firing the next SCR pair C-A' as shown on lines 4 and 6. During period 3, as shown on line 2 and which during the low state is a fixed 1.0 milliseconds, timer 1 interrupt service routine will compute the regulated base phase angle which, as described hereinafter, will be continuously recomputed utilizing the previous base angle during each 1.0 millisecond period until the next zero cross at which the last regulated base phase angle will then be the time set into timer 2 during the zero cross interrupt. Also, during regulation, any active timer will be adjusted based on the current sampled on the rising edge of PB7 associated timer 1 interrupt. In this manner the firing of the initial pair of SCRs will be readjusted based on the current conditions which had existed in the prior cycle, i.e. actual current versus ideal.

Upon the occurrence of the next rising edge of PB7 or period 4 as shown on line 2 of Figure 38, the timer 1 interrupt service routine will sample the actual current, compare it to the ideal current and

13

recompute the adjustment to the phase adjustment angle necessary to be placed in timer 1 to adjust the theretofore 1.777 milliseconds necessary to achieve the ideal current. The manner in which this computation is made will be explained in the discussion of the timer 1 interrupt service routine flow charts which follow.

The recomputation of the base phase angle again occurs in period 5 and the computation of the adjustment to timer 1 time occurs in period 6 and this continues on until the next zero cross. Upon the next zero cross, the zero cross interrupt service routine is commenced and the cycle is repeated until ultimately the number of cycles and/or readjusted number of cycles for the welding current is achieved and the welding current discontinued in the case of the stud welding controller being in the stud welding mode.

As will be pointed out hereinafter in the discussion of the timer 1 interrupt service routine, the foregoing descriptions of events occurring will be altered if the stud welding controller is operating in the pilot arc state if in the stud welding mode or in the stick welding mode. Essentially in the pilot arc state of the stud welding mode or stick mode, the calculations used to compute the regulated base phase angle and the phase adjustment angle use an average of a rolling 16 phases as in the case of the main welding current computations in the stud welding mode.

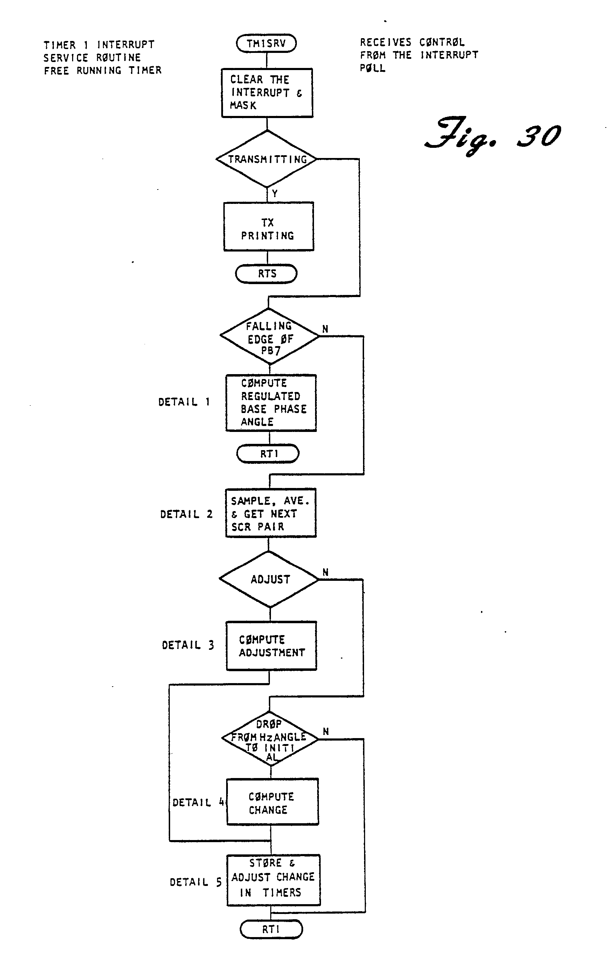

Attention will now be directed to Figure 30 which is the broad outline of the timer 1 interrupt service routine. At the beginning of the timer 1 interrupt service routine, the interrupt mask is cleared and the decision is made as to whether or not the microprocessor system is transmitting data to the mechanical printer. If so, the routine loops until the printing is done. This occurs in the initial startup of the equipment and every 55th line thereafter, during which the printer prints an appropriate heading. If printing is not occurring, then the routine determines whether or not PB7 is rising or falling upon the occurrence of an interrupt from timer 1 which is generated upon either the rising or falling edge of PB7.

For the purposes of the description of the timer 1 interrupt service routine, it will be assumed that the interrupt is from a falling edge PB7. In this case the routine will compute the regulated base phase angle and return from the interrupt. If the timer interrupted the zero cross routine, the control will return to that routine, not background. The manner in which the regulated base phase angle is computed will be described in the description of the flow charts pertaining to detail 1 which follows hereinafter.

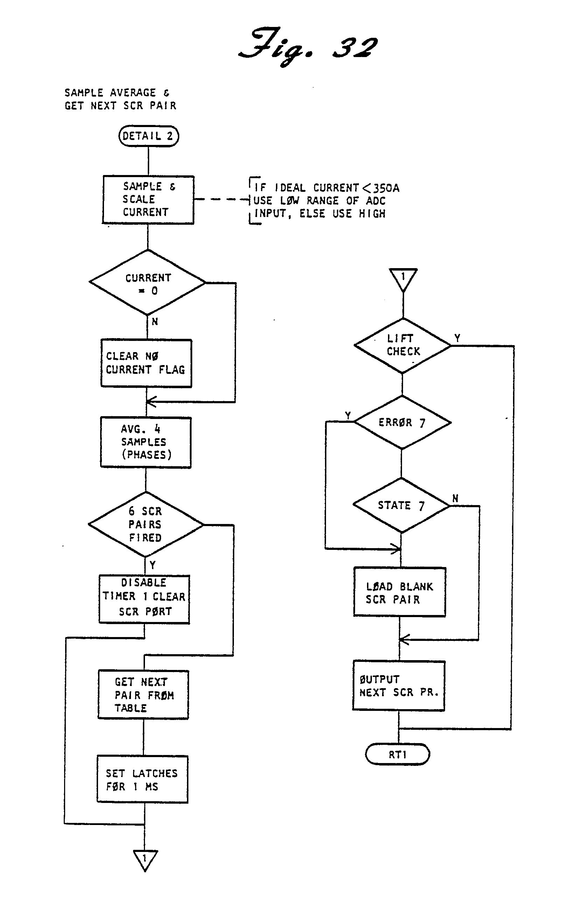

Assuming for purposes of explanation that the timer 1 interrupt occurs upon the rising edge of PB7, then the routine will take the current sample, compute the average of the required number of samples (2 or 16 as heretofore described) and select the next SCR pair. This occurs in the routine set forth in detail 2 in Figure 32 which will be described in detail hereinafter.

Following the selection of the next SCR pair, etc., the decision is made whether or not an adjustment to the phase angle firing should be made. This decision will be no in the beginning of pilot arc and in stick mode until current, meaning an arc has been initiated, is sensed. The appropriate flags are set elsewhere which will control this decision. An example of such would be in the pilot arc state during the very initial few phases.

Assuming for purposes of explanation that the decision is made that adjustments are to be computed. The routine then passes to the compute adjustment routine which is set forth in detail 3 as will be described in detail 3 hereinafter. The amount of adjustment to the regulated phase angle, i.e. the time set in timer 1 is computed based upon the electrical current conditions existing in the prior phases.

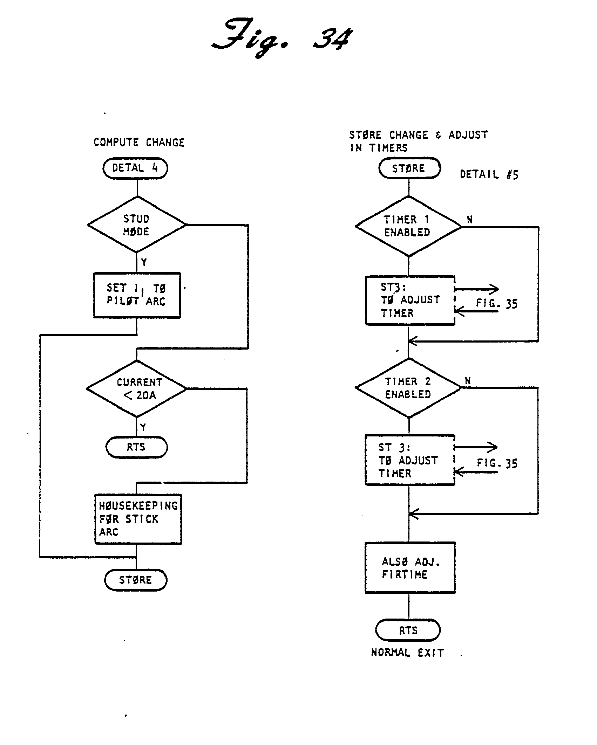

Following the computation of the required adjustment, the adjustment is applied to the count read from the timer and restored in the timer so that the appropriate adjustment is made to the timing of timer 1 to adjust the timing out of timer 1 and the creation of the timer 1 interrupt on the falling edge PB7 to fire the next pair of SCRs. Detail 5 is shown in Figure 34 and a subroutine of detail 5 is shown in Figure 35 respecting the adjustment of the timer.

Assuming for the purposes of explanation of the timer 1 interrupt service routine that the appropriate flags are set to not require adjustment of the adjusted phase angle, then the decision is made whether an initial high angle set in the background for the pilot arc state and stick welding modes is to be maintained or dropped. The pilot arc state requires two phases to be fired and the stick mode requires sensing of a current level sufficient to indicate an arc has been initialized before the flag permitting dropping from high angle to initial angle is set thus permitting a decision at this point to be yes. If the decision is no indicating that two conditions have not been met, then the routine exits the timer 1 interrupt service routine and returns from the interrupt until the sufficient conditions have occurred for the decision to be yes to drop from the high angle to initial.

When the decision is made to drop to initial angle, then the routine enters the subroutine of compute change shown in detail 4 in Figure 34. The routine then moves into the store and adjust change in timers routine set forth in detail 5 which will likewise be discussed hereinafter.

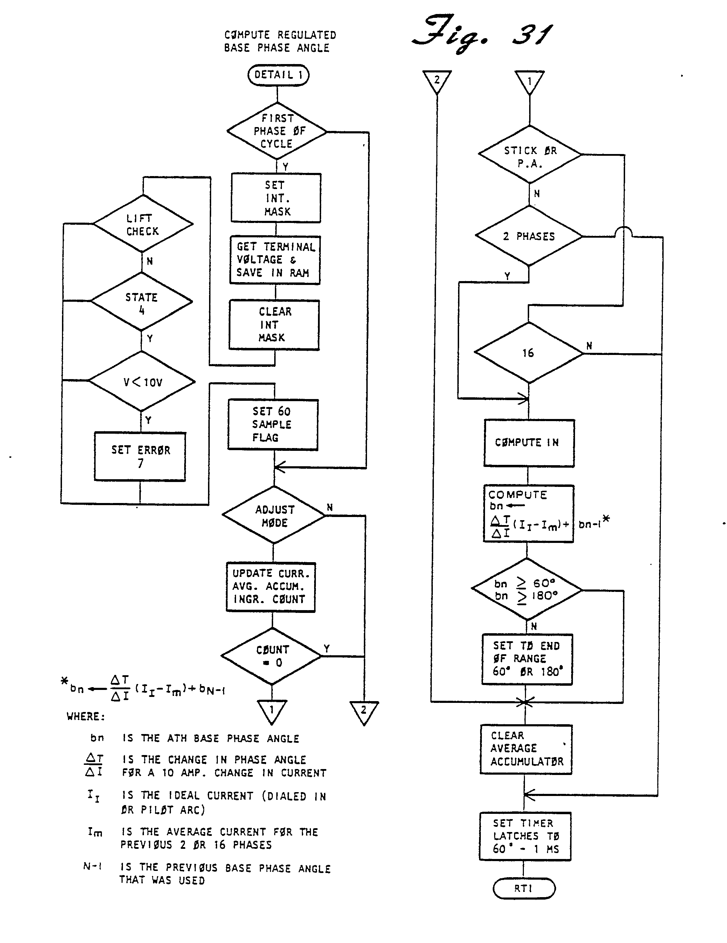

Turning now to detail 1 shown in Figure 31, a discussion will now be undertaken of the subroutine for computing the regulated base phase angle. The determination is made whether the system is in the first phase of a cycle and if yes, the terminal voltage is set in RAM and thereafter ignored. The routine then passes through a series of determinations to determine an error 7 condition which is a low terminal voltage in the main welding sequence. Thereafter, the sample received flag is set and the determination made whether or not adjustments are to be made. If not, the routine essentially passes out of the routine after clearing accumulators and setting latches.

When adjustments are to be made, the routine next updates the current average accumulator with the current sample previously received and increments the counter and passes on to a determination whether the cycle counter has timed out and, if not, continues with the computations. If computations are to be made, the determination is then made whether the controller is in the stick, pilot arc or main stud welding mode. The mode determines whether or not the average is to be based on two phases or 16 phases.

The microprocessor now makes the computations for the change in base phase angle in accordance with the calculations set forth in the flow diagram, explanations to the right side thereof and as further described in the chart on calculations set forth in section V charts. Additional determinations are made whether or not the calculations are out of range and if so, boundaries on the range are set to prevent loss of control. Thereafter, the average accumulators are cleared and the timer 1 latch is set for the 1.0 millisecond timing which will be utilized in timer 1 following the timing out of timer 1 and in the period following the falling edge of PB7.

Turning now to detail 2 in Figure 32, the current is sampled and scaled by means of the analog to digital converter and the determination made whether the current equals 0 and, if not, the no current flag is cleared. Thereafter, an average of the current samples in the four preceding phases is determined.

The decision is then made whether six pairs of SCRs have been fired which, if yes, indicates that no more SCRs should be fired in that cycle whereupon timer 1 is disabled and the SCR ports from the VIA are cleared. If less than 6 SCRs have been fired indicating that additional firings are to be done, then through the program the next pair to be chosen is identified which will follow the down edge of the PB7 pulse. Finally, the determinations are made whether in the lift check mode, state 7 or error 7 and the appropriate decision is made as shown in the flow diagram.

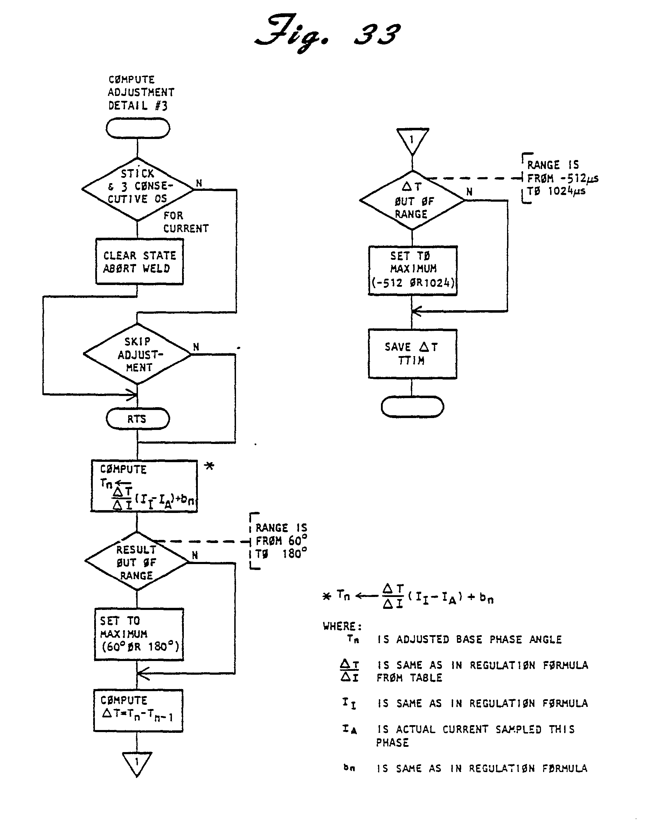

Detail 3 for computing adjustment of phase angle firing is shown in Figure 33 of the drawings. Initially in this routine and if in the stick mode, the determination is made whether there are three consecutive 0 current readings indicating loss of arc and, if so, the state is cleared and the weld cycle aborted. If not, the decision is made whether adjustment is to be made and, if not, which would be the case of a flag set in background for the initial firing phase, then the routine is ended. If the skip adjustment flag is not set, the computations are made to adjust the adjusted phase angle in accordance with the equations and logic set forth in the flow diagram and the notes on the right-hand side thereof together with the calculations set forth in section V charts. Additionally, checks are made to whether or not the determinations or calculations are out of range and if so, ranges are set for the phase adjustment to maintain control. The calculated result is saved at address TTIM and the subroutine returns back to the main routine as set forth in Figure 30.

The compute change subroutine is shown in detail 4 in Figure 34. In this routine, which is entered following a determination of whether the initial high angle is to be dropped, the decision is made whether in the stud welding mode or stick mode. This subroutine will be entered only if in the nonadjust mode and the determination was made that background was either in pilot arc or stick. Thus, if the stud mode decision is yes, then the background must be in the pilot arc state and in that condition the pilot arc initial current $I_i$ is set in the appropriate register and the routine moved on to the store change in timers routine.

If background is in the stick mode, then the decision is made whether the current is less than 20 amps indicating an unstable or nonexistent arc. If yes, the routine is returned to background and no computations are made. If the current is greater than 20 amps in the stick mode, then the routine passes to the housekeeping for stick arc routine which resets various accumulators. Current adjustments will be provided as if in the stud welding mode.

The store and adjust change in timers routine of detail 5 is shown in Figures 34 and 35. Initial determination is made whether timer 1 is enabled in that it could have been disenabled under certain conditions such as the six SCR pairs having been fired. If timer 1 is enabled, then the subroutine to adjust timer is undertaken. This is shown in Figure 35.

In the "to adjust timers" routine, the timer is first read to determine the elapsed time in the appropriate timer. Thereafter, the timer is looked to as to whether or not the timer is in the rollover condition and, if not, the amount of time computed in detail 3 is algebraically added to the timer amount. A check is made to see whether the recomputed time has exceeded the maximum and if so, the arbitrary 100 microseconds time is placed into the timer to immediately terminate the timing providing a falling edge of PB7. If not in overflow, then the actual computed time, after checking whether timer 2 is being adjusted, is written to timer 1 to control the time of firing the next SCRs which occurs on the falling edge of PB7 upon timing out of timer 1.

If this routine was called for the purpose of adjusting timer 2, then the logic is to change the mode of PB7, write to timer 2 the appropriate adjusted time, put the PB7 mode back to automatic toggling of PB7 and set the latches for 1 millisecond.

Returning back to Figure 34, if timer 2 is enabled, then the previously described routine will occur to change timer 2, etc. If timer 2 is not enabled, then the "to adjust timer" routine is not passed through.

Following the accomplishment of the logic determining whether or not timer 1 is written to, and in any event, the base phase firing angle time (FIRTIM) is adjusted based upon the calculations which were done under detail 1. This is so that the base plate angle firing time is always available to the zero cross routine. Thereafter, the routine returns to the main routine shown in Figure 30 which essentially is a return from interrupt.

(d) RIOT timer interrupt service routine:

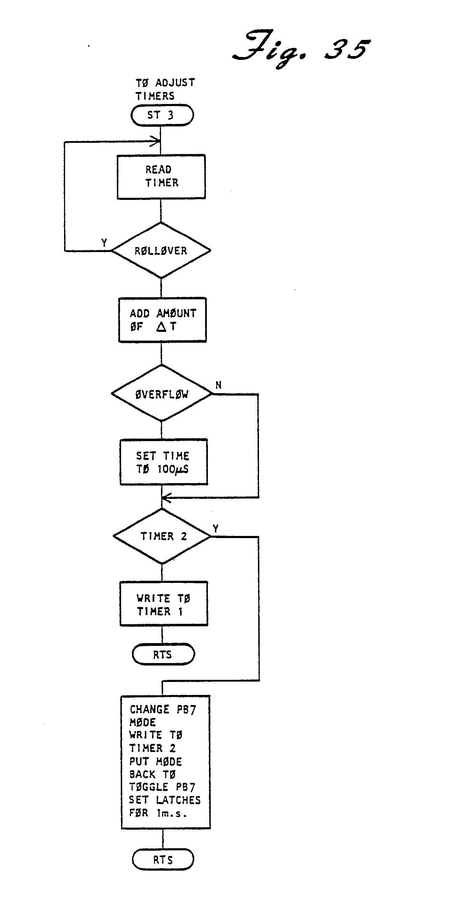

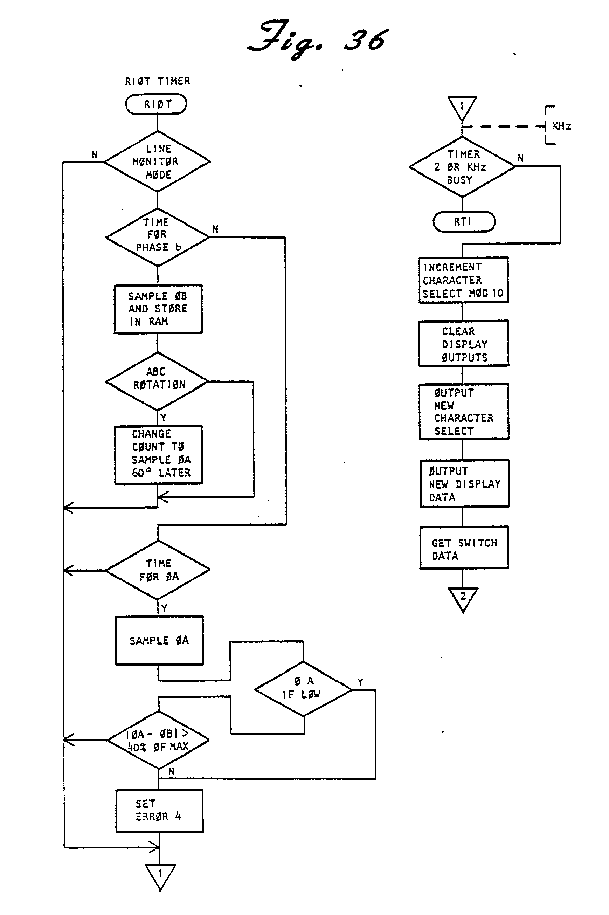

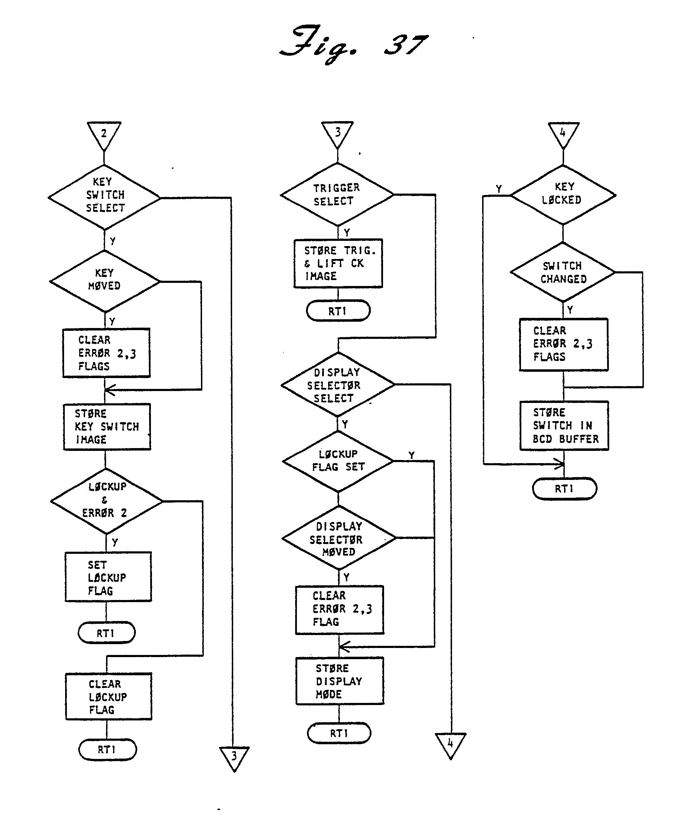

The RIOT timer interrupt service routine is shown in Figures 36 and 37 of the drawings. That portion of

15

**0 073 818**

the flow diagram shown on the left-hand side of Figure 36 essentially determines a missing phase and creates an error 4 signal. In the reset routine in Figure 16, an initial delay of 150° was set from zero cross to check a peak voltage occurring on a reference input to determine A, B, C or A, C, B rotation. The routine waits for the time to sample the B phase and then looks to RAM for a flag set for determination of whether A, B, C or A, C, B rotation. If A, C, B rotation, then the routine passes out and waits for the time for checking of a phase. On the other hand, if rotation was A, B, C, then the delay is changed to sample 60° later. The 150° delay in Figure 16 pertains to determining of rotation only and occurs one time. The line voltage monitoring is done periodically once per minute in idle mode. The timing for line voltage monitoring is only indirectly related to rotation determination timing. This manipulation is simply made to set the sampling period that will be later used to sample phase "A" upon the occurrence of the time to sample phase "A".

Upon the occurrence of the time to sample phase "A", the comparison is first made if phase "A" is low and, if as, an error 4 code set. If phase "A" is not low, then a comparison is made between phase "A" and phase "B", which values have both been stored in RAM previously, to determine if they are within 40%. The interreaction of the three phases, one to another, will indicate the loss of either the "B" or "C" phase resulting in the differential between "A" and "B" phases being in excess of 40%. Upon this occurrence, an error 4 signal is set. If an error is indicated, then the testing frequency is increased to a higher rate. If no error is detected, then the error 4 is cleared.

Moving to the right-hand portion of Figures 36 and 37, the KHz routine broadly accomplishes the functions of reading all of the status switches and thumbwheels and provides the display refresh as well as the display select and the trigger switch logic. It is believed that the routines for servicing the switches, providing displays, etc., are sufficiently set forth in the flow charts of Figures 36 and 37 and need not be explained further.

IV. Assembled program

Set forth in the Appendix attached is a copy of the assembled program in the assembly language for the Motorola 6802 microprocessor which carries out the logic functions of the flow charts heretofore described.

V. Charts

Set out immediately hereinafter are the following charts which have been referred to in the preceding description of the stud/stick welding controller of the present invention.
(1) Error codes;
(2) Table of components;
(3) Calculations.

(1) Error codes

| Error code | Meaning/conditions | Clearing action |
|---|---|---|
| 00 | Self-test failed. This results in a total machine lockup. | None; unconditional and unclearable lockup. Remove and restore power to attempt another self-test. |
| 01 | Less than 50% current detected. This would indicate a major hardware malfunction (e.g. an open SCR). This will result in the display alternating the error code with the current, and disallowing any further welds, unconditionally. | None; unconditional and unclearable lockup. Remove and restore power to weld again. |
| 02 | Total energy not within three percent of the requested total energy. This would occur if the requested current could not be delivered, even though the number of cycles had already been increased by 10% maximum. It will result in the error code and current alternating on the display. It will also optionally lock up the machine until the error is cleared via the key switch (see section I, 9 for details). | Turn key switch if lockup option selected. Change display selector or any system parameter, if no lockup, to remove error code from display. No operator intervention required if no lockup. |

16

# 0 073 818

| Error code | Meaning/conditions | Clearing action |
|---|---|---|
| 03 | Total energy is within three percent, but the number of cycles was increased to achieve this result. It results in an alternating error code and number of cycles on the display. | None; self-clearing Warning only—no operator intervention required. |
| 04 | One or more phases of the primary are missing. It results in an unconditional machine lockup. | None; unconditional and unclearable lockup. Remove and restore power to attempt to weld again. |
| 05 | Current set out of range. (i.e. below 50 amps or above 500 amps in stick mode, or below 50 amps in stud mode). | Change thumbwheel setting. |
| 06 | Zero cycle firing time set. | Change thumbwheel setting. |
| 07 | Terminal voltage less than 10 v. This condition will be caused by a "shorted" or a hangup in the gun. The weld current will be turned off within 3 phases (8.4 ms). This protects the main SCR bridge from needless excess surge current. The error code and terminal voltage will alternate on the display. | None; self-clearing. Warning only—no operator intervention required. |
| 08 | Gun sense. A cam lock interlock switch is used to determine the presence of a cam lock in the "stick" connector. If the unit is in the "stick" mode, the error will display if the "stick" connector is vacant. If the "stick" connector is mated, the error will display when in the "stud" mode. | Place cable in correct cam lock for either "stick" or "stud" mode. |
| 09 | Printer error. Error will be displayed when the printer is not connected, or out of paper or during printing. | Reconnect printer, replace paper or wait for completion of printing. |

**0 073 818**

(2) Table of components

| Reference character | Component | Model # |
|---|---|---|
| 30 | Microprocessor | MC6802 |
| 31 | VIA | SY6522 |
| 32 | RIOT | SY6532 |
| 33 | ROM | 2716 |
| 34 | Address decoder | See Fig. 5 |
| 35 | A/D converter | ADC0808 |
| 36 | Reset generator | 4093/74LS123 |
| 37 | 50 µs pulse gen. | 74L5123 |

For other components—see details of Figs. 3—13.

(3) Calculations

The following calculations will be performed:

(1) The initial base phase angle from zero cross to firing the first phase will be computed using the function

$$B = -1.25*I + 5273$$

where I is the ideal current B is the initial base phase angle in time (microseconds).

(2) Average terminal voltage

This is a displayed value. The terminal voltage will be measured once per cycle, and the average voltage will be computed at the end of the weld as the arithmetic mean of the voltages.

(3) Average weld current

This is a displayed value, and is also used in the total energy computation. It is computed as the arithmetic mean of all the current readings (one per cycle). The first cycle is not included in the average.

(4) Total energy

This is a displayed value, given by the following equation:

$$E = V(avg)*I(avg)*T$$

Where:

E is the energy in watt-seconds

V(avg) is the average terminal voltage

I(avg) is the average weld current

T is the weld time in seconds.

This number is computed at the completion of a weld.

(5) During every phase any running timer is adjusted by

$$T(n) - T(n-1)$$

where $T(n) = G*(I-A) + B$

G is the gain for the regulated current

I is ideal current

A is actual current

B is the same as in 1

T(n−1) is from the previous cycle.

(6) Every two or sixteen phases, the base phase angle (B) is recomputed using:

$$B(n+1) = G(I-m) + B(n)$$

where G is same as in 5

I is same as in 5

m is the average current during the previous two cycles in stud mode or sixteen cycles in pilot arc or stick mode

B(n) is the previous base phase angle.

(7) There will be a table of gains (G) for each current from 50 to 2,000 amps in 50 amp increments. Interpolation will be used for values between table entries.

18

**Claims**

1. Apparatus for welding together two metallic workpieces by heating by an electric welding arc, including an alternating current power supply, a welding gun for holding one workpiece through which weld current is passed in creating the welding arc, weld current cable means interconnecting the current power supply and the gun, and a general purpose digital computer (30) for use in controlling operation of the apparatus, characterised in that the gun is a stud welding gun and that, for controlling, during a welding sequence, the total welding energy delivered from the welding current power supply to a welding stud carried by the stud welding gun the apparatus includes:

programmable weld current reference means (22) accessible by the computer into which the ideal weld current can be set and providing an ideal weld current reference signal;

weld current sensing means (10, 11, 12, 41, 42, 35) accessible by the computer (30) providing an actual weld current signal proportional to the actual weld current;

current regulating means (31, 37, 43, 44) under control of the computer (30) capable of initiating, varying and terminating the output of the current power supply;

a program for the general purpose computer to instruct the computer (30) to periodically compare the ideal weld current reference signal with the actual weld current signal and adjust the current regulating means (31, 37, 43, 44) to adjust the actual weld current to equal the ideal weld current;

programmable weld current cycle reference means (21) accessible by the computer (30) into which a preselected number of weld current cycles can be set and providing an ideal weld current cycle reference signal;

weld current cycle counting means (16, 31, 38, 43) providing an actual weld current cycle count accessible by the computer (30); and

welding voltage sensing means (35, 15, 45, 46, 47, 48, 49) accessible by the computer (30) providing an actual weld voltage signal proportional to the actual welding terminal voltage;

wherein the program further instructs the computer (30) to compare the ideal weld current cycle reference signal with the actual weld current cycle count and, upon a given relationship between the two occurring, to compute and store each of the average welding current, average welding voltage and total welding sequence time and compute and store the total weld sequence energy as the product of the average welding current, average welding voltage and total welding sequence time, and to compute and compare the ideal total weld sequence energy with the actual total weld sequence energy and, if the actual total energy is substantially less than the ideal total energy, to cause a number of additional weld current cycles proportional to the difference and not more than a fixed maximum percentage of the said set preselected number of weld current cycles to be carried out.

2. Apparatus according to claim 1, characterised by alpha/numeric display means (28) interfaced with the computer (30); and

wherein the program instructs the computer (30) to retrieve and display at the alpha/numeric display (28) the values of the average welding voltage, average welding current, number of current cycles for the welding sequence and total weld sequence energy.

3. Apparatus according to claim 1, characterised in that the program instructs the computer (30) to compute and compare the ideal total weld sequence energy with the actual total weld sequence energy at the end of the welding sequence and to create error signals indicative of the percentage deviation of the actual total weld sequence energy below the ideal total weld sequence energy.

4. Apparatus according to claim 3, characterised in that the program instructs the computer (30) to display the generated error signal at the alpha/numeric display means (28).

5. Apparatus according to claim 3, characterised in that the program instructs the computer (30), upon the presence of selected error signals, to generate a program interrupt causing a program lockup.

6. Apparatus according to claim 1, characterised in that the welding gun includes a lift solenoid and the control system further includes:

lift solenoid control means (18, 31, 51) interfaced to the computer (30);

programmable pilot arc reference means (22) accessible by the computer (30) and providing an ideal pilot arc current reference signal;

programmable pilot arc current cycle reference means (21) accessible by the computer (30) into which a preselected number of pilot arc current cycles can be set and providing an ideal pilot arc current cycle reference signal; and

wherein the program instructs the computer (30) by means of the lift solenoid control means (18, 31, 51) to initiate lift and plunge in accordance with the ideal pilot arc current reference signal and initiate the main welding current upon reaching the predetermined number of pilot arc current cycles.

7. Apparatus according to claim 1, further characterised by including a two state lift check switch (24) accessed by the computer (30); and wherein the program instructs the computer (30) upon the lift check switch (24) being in a predetermined state to execute a complete weld sequence with the exception that the weld current is inhibited.

8. Apparatus according to claim 1, further characterised by including a two state hot/cold plunge switch accessed by the computer (30); and

wherein the program instructs the computer (30) upon the hot/cold plunge switch being in a

# 0 073 818

predetermined state to cause the weld sequence to include an additional predetermined number of current cycles during which the welding current is maintained after contact of the stud with the workpiece.

9. Apparatus according to claim 8, characterised in that the program instructs the computer (30) to ignore the said additional predetermined number of current cycles in computing average welding current, average welding voltage, total welding sequence time and total weld sequence energy.

## Patentansprüche

1. Schweißvorrichtung zur Verschweißung zweier metallischer Arbeitsstücke durch Erhitzen vermittels eines Elektroschweißlichtbogens, aufweisend eine Wechselstromenergiequelle, eine Schweißpistole zur Halterung des einen Arbeitsstückes, durch welchen der Strom zur Bildung des Schweißlichtbogens hindurchgeht, ein Schweißstromkabel, welches die Energiequelle und die Pistole miteinander verbindet, und einen digitalen Allzweckcomputer (30) zur Verwendung bei der Steuerung des Arbeitsvorgangs der Vorrichtung, dadurch gekennzeichnet, daß die Pistole eine Bolzenschweißpistole ist und daß zur Steuerung der gesamten Schweißenergie während eines Schweißvorganges, die von der Schweißstromenergiequelle zu einem von der Bolzenschweißpistole gehaltenen Schweißbolzen geliefert wird, die Vorrichtung aufweist:

Eine programmierbare für den Computer zugängliche Schweißstrombezugseinrichtung (22), in welcher der ideale Schweißstrom ein-gestellt werden kann und welche ein Ideal-Schweißstrombezugssignal erzeugt;

eine Schweißstrom-Abfühleinrichtung (10, 11, 12, 41, 42, 35), die für den Computer (30) zugänglich ist und ein Ist-Schweißstrom-Signal erzeugt, welches dem tatsächlichen Schweißstrom proportional ist;

Stromregeleinrichtungen (31, 37, 43, 44), die unter der Steuerung des Computers (30) in der Lage sind, den Ausgang der Stromenergiequelle einzuleiten, zu verändern und zu beendigen;

ein Programm für den Allzweckcomputer, um den Computer (30) so zu instruieren, daß er periodisch das Ideal-Schweißstrom-Bezugssignal mit dem Ist-Schweißstrom-Signal vergleicht und die Stromregeleinrichtungen (31, 37, 43, 44) so einstellt, daß der Ist-Schweißstrom gleich dem Ideal-Schweißstrom eingestellt wird;

programmierbare für den Computer (30) zugängliche Schweißstromzyklus-Bezugseinrichtungen (21), in welchen eine vorgewählte Zahl von Schweißstromzyklen eingestellt werden kann und welche ein Ideal-Schweißstromzyklus-Bezugssignal erzeugen;

Schweißstromzyklus-Zähleinrichtungen (16, 31, 38, 43), die einen Ist-Schweißstromzyklus-Zählwert erzeugen, der für den Computer (30) zugänglich ist;

und für den Computer (30) zugängliche Schweißspannungs-Abfühleinrichtungen (35, 15, 45, 46, 47, 48, 49), die ein Ist-Schweißspannungs-Signal erzeugen, welches zur Ist-Schweißspannung an den Anschlüssen proportional ist;

wobei das Program weiterhin den Computer instruiert, um das Ideal-Schweißstromzyklus-Bezugssignal mit dem Ist-Schweißstromzyklus-Zählwert zu vergleichen und um, wenn ein gegebenes Verhältnis zwischen diesen beiden auftritt, jede der folgenden Größen zu berechnen und zu speichern: den mittleren Schweißstrom, die mittlere Schweißspannung und die gesamte Schweißzeit und um die gesamte Schweißvorgangsenergie als Produkt des mittleren Schweißstroms, der mittleren Schweißspannung und der gesamten Schweißzeit zu berechnen und zu speichern, und um die ideale gesamte Schweißvorgangsenergie zu berechnen und mit der tatsächlichen Schweißvorgangsenergie zu vergleichen und, falls die tatsächliche gesamte Energie wesentlich kleiner als die ideale gesamte Energie ist, um eine Anzahl zusätzlicher Schweißstromzyklen einzuleiten, die proportional zur Differenz und nicht mehr als ein festgelegter maximaler Prozentsatz der vorher ausgewählten Zahl auszuführender Schweißstromzyklen ist.

2. Vorrichtung nach Anspruch 1, gekennzeichnet durch eine alpha-numerische mit dem Computer (30) verknüpfte Darstellungseinrichtung (28), wobei das Programm den Computer (30) instruiert, die Zahlenwerte des Mittelwertes der Schweißspannung, des Mittelwertes des Schweißstromes, die Zahl der Stromzyklen für den Schweißvorgang und die gesamte Schweißenergie zu ermitteln und in der alpha-numerischen Darstellung (28) darzustellen.

3. Vorrichtung nach Anspruch 1, dadurch gekennzeichnet, daß das Programm den Computer (30) instruiert, die ideale gesamte Schweißvorgangsenergie mit der tatsächlichen Schweißvorgangsenergie am Ende des Schweißvorganges zu berechnen und zu vergleichen und ein Fehlersignal zu erzeugen, welches die prozentuale Abweichung der gesamten tatsächlichen Schweißenergie unterhalb der idealen Schweißenergie anzeigt.

4. Vorrichtung nach Anspruch 3, dadurch gekennzeichnet, daß das Programm den Computer (30) anweist, das erzeugte Fehlersignal auf der alpha-numerischen Darstellungseinrichtung (28) darzustellen.

5. Vorrichtung nach Anspruch 3, dadurch gekennzeichnet, daß das Programm den Computer (30) instruiert, beim Auftreten eines ausgewählten Fehlersignals eine Programmunterbrechung zu bewirken, um die Durchführung des Programms zu sperren.

6. Vorrichtung nach Anspruch 1, dadurch gekennzeichnet, daß die Schweißpistole eine Hebespule und das Steuersystem weiterhin aufweist:

Eine mit dem Computer (30) verknüpfte Steuereinrichtung (18, 31, 51) für die Hebespule;

eine für den Computer (30) zugängliche programmierbare Pilot-Lichtbogen-Bezugseinrichtung (22), welche ein Ideal-Pilot-Lichtbogenstrom-Bezugssignal erzeugt;

eine für den Computer (30) zugängliche programmierbare Pilot-Lichtbogenstrom-Zyklus-Bezugseinrichtung (21), in welcher eine vorher ausgewählte Anzahl von Pilot-Lichtbogenstrom-Zyklen eingestellt werden kann und welche ein Ideal-Pilot-Lichtbogenstrom-Zyklus-Bezugssignal erzeugt; und wobei

das Programm den Computer (30) instruiert, mit Hilfe der Hebespule-Steuereinrichtung (18, 31, 51) einen Anhebe- und Schubvorgang in Übereinstimmung mit dem Ideal-Pilot-Lichtbogenstrom-Bezugssignal zu erzeugen und den Hauptschweißstrom beim Erreichen der vorbestimmten Zahl von Pilot-Lichtbogen-Zyklen einzuleiten.

7. Vorrichtung nach Anspruch 1, gekennzeichnet durch einen für den Computer (30) zugänglichen Zweistellungs-Anhebe-Prüfschalter (24); und

wobei das Programm den Computer (30) instruiert, wenn sich der Anhebe-Prüfschalter (24) in einer vorbestimmten Stellung befindet, einen kompletten Schweißvorgang jedoch mit der Ausnahme durchzuführen, daß der Schweißstrom gesperrt ist.

8. Vorrichtung nach Anspruch 1, gekennzeichnet durch einen über den Computer (30) zugänglichen Zweistellungs-Heiß-Kalt-Plungerschalter; und

wobei das Programm den Computer instruiert, dann, wenn sich der Heiß-Kalt-Stellungsschalter in einer vorbestimmten Stellung befindet, einen Schweißvorgang durchzuführen, der eine zusätzliche vorbestimmte Anzahl von Stromzyklen aufweist, während welcher der Schweißstrom nach dem Kontakt des Bolzens mit dem Arbeitsstück aufrechterhalten bleibt.

9. Vorrichtung nach Anspruch 8, dadurch gekennzeichnet, daß das Programm den Computer (30) instruiert, diese zusätzliche vorbestimmte Anzahl von Stromzyklen bei der Berechnung des mittleren Schweißstromes, der mittleren Schweißspannung und der gesamten Schweißvorgangszeit und der gesamten Schweißvorgangsenergie zu ignorieren.

**Revendications**

1. Appareil pour souder ensemble deux pièces métalliques par chauffage à l'aide d'un arc électrique de soudage, comprenant une source d'alimentation en courant alternatif, un pistolet de soudage pour maintenir une pièce à travers laquelle on fait passer un courant de soudage en créant l'arc de soudage, un moyen formant câble pour le courant de soudage reliant la source d'alimentation en courant et le pistolet, et un calculateur numérique universel (30) utilisé pour commander le fonctionnement de l'appareil, caractérisé en ce que le pistolet est un pistolet de soudage à l'arc avec percussion et en ce que pour régler, pendant une séquence de soudage, l'énergie totale de soudage fournie par la source d'alimentation en courant de soudage à un goujon de soudage supporté par le pistolet de soudage à l'arc avec percussion, l'appareil comprend:

un moyen programmable (22) de référence du courant de soudage, accessible par le calculateur, dans lequel le courant idéal de soudage peut être réglé et fournissant un signal de référence du courant idéal de soudage;

des moyens (10, 11, 12, 41, 42, 35) de détection du courant de soudage, accessibles par le calculateur (30), fournissant un signal du courant réel de soudage proportionnel à ce courant réel de soudage;

des moyens (31, 37, 43, 44) de régulation du courant, commandés par la calculateur (30), capables de déclencher, de modifier et d'arrêter la sortie de la source d'alimentation en courant;

un programme pour le calculateur universel pour donner au calculateur (30) des instructions afin de comparer périodiquement le signal de référence du courant idéal de soudage avec le signal du courant réel de soudage et régler les moyens (31, 37, 43, 44) de régulation du courant afin de rendre le courant réel de soudage égal au courant idéal de soudage;

un moyen programmable (21) de référence de la période du courant de soudage, accessible par le calculateur (30), dans lequel un nombre présélectionné de périodes du courant de soudage peuvent être réglées et fournissant un signal de référence de la période du courant idéal de soudage;

des moyens (16, 31, 38, 43) de comptage des périodes du courant de soudage, fournissant un compte des périodes du courant réel de soudage, accessibles par le calculateur (30); et

des moyens (35, 15, 45, 46, 47, 48, 49) sensibles à la tension de soudage, accessibles par le calculateur (30), fournissant un signal de la tension réelle de soudage proportionnel à cette tension réelle de soudage au bournes;

dans lequel le programme donne en outre au calculateur (30) des instructions afin de comparer le signal de référence de la période du courant idéal de soudage avec le compte des périodes du courant réel de soudage et, lorsqu'une relation donnée entre les deux est établie, pour calculer et mémoriser individuellement le courant moyen de soudage, la tension moyenne de soudage et la durée totale de la séquence de soudage et pour calculer et mémoriser l'énergie totale de la séquence de soudage résultant du produit du courant moyen de soudage, de la tension moyenne de soudage et de la durée totale de la séquence de soudage, et pour calculer et comparer l'énergie totale idéale de la séquence de soudage avec l'énergie totale réelle de la séquence de soudage et, si cette énergie totale réelle est sensiblement inférieure à l'énergie total idéale, effectuer un certain nombre de périodes supplémentaires du courant de soudage,

# 0 073 818

proportionnel à la différence mais sans dépasser un pourcentage maximum fixe du nombre présélectionné et réglé de périodes du courant de soudage.

2. Appareil suivant la revendication 1, caractérisé par un moyen (28) d'affichage alphanumérique connecté au calculateur (30); et

dans lequel le programme donne des instructions au calculateur (30) pour extraire et afficher sur le moyen (28) d'affichage alphanumérique les valeurs de la tension moyenne de soudage, du courant moyen de soudage, du nombre de périodes du courant pour la séquence de soudage et de l'énergie totale de la séquence de soudage.

3. Appareil suivant la revendication 1, caractérisé en ce que le programme donne des instructions au calculateur (30) pour calculer et comparer l'énergie totale idéale de la séquence de soudage avec l'énergie totale réelle de la séquence de soudage à la fin de la séquence de soudage, et pour créer des signaux d'erreur indiquant l'écart inférieur en pourcent de l'énergie totale réelle de la séquence de soudage par rapport à l'énergie totale idéale de la séquence de soudage.

4. Appareil suivant la revendication 3, caractérisé en ce que le programme donne des instructions au calculateur (30) pour afficher le signal d'erreur créé sur le moyen (28) d'affichage alphanumérique.

5. Appareil suivant la revendication 3, caractérisé en ce que le programme donne des instructions au calculateur (30), en présence de signaux d'erreur sélectionnés, pour créer une interruption de programme provoquant un blocage du programme.

6. Appareil suivant la revendication 1, caractérisé en ce que le pistolet de soudage comprend un solénoïde de soulèvement et en ce que le système de commande comprend en outre;

des moyens (18, 31, 51) de commande du solénoïde de soulèvement, connectés au calculateur (30);

un moyen programmable (22) de référence de l'arc pilote, accessible par le calculateur et fournissant un signal de référence du courant idéal de l'arc pilote;

un moyen programmable (21) de référence de la période du courant de l'arc pilote, accessible par le calculateur, dans lequel un nombre présélectionné de périodes du courant de l'arc pilote peuvent être réglées et fournissant un signal de référence de la période du courant idéal de l'arc pilote; et

dans lequel le programme donne des instructions au calculateur (30) par l'intermédiaire des moyens (18, 31, 51) de commande du solénoïde de soulèvement pour déclencher le soulèvement et le plongeon conformément au signal de référence du courant idéal de l'arc pilote, et pour déclencher le courant principal de soudage lorsque le nombre prédéterminé de périodes du courant de l'arc pilote est atteint.

7. Appareil suivant la revendication 1, caractérisé en outre en ce qu'il comprend un commutateur (24) de contrôle du soulèvement à deux états, accessible par le calculateur (30); et dans lequel le programme donne des instructions au calculateur (30) lorsque le commutateur (24) de contrôle du soulèvement se trouve dans un état prédéterminé afin d'effectuer une séquence complète de soudage, excepté si le courant de soudage est bloqué.

8. Appareil suivant la revendication 1, caractérisé en outre en ce qu'il comprend un commutateur de plongeon à chaud et à froid à deux états, accessible par le calculateur (30); et

dans lequel le programme donne des instructions au calculateur (30) lorsque le commutateur de plongeon à chaud et à froid se trouve dans un état prédéterminé afin d'amener la séquence de soudage à inclure un nombre supplémentaire prédéterminé de périodes de courant pendant lesquelles le courant de soudage est maintenu après contact du goujon avec la pièce.

9. Appareil suivant la revendication 8, caractérisé en ce que le programme donne des instructions au calculateur (30) pour qu'il ignore ce nombre supplémentaire prédéterminé de périodes de courant en calculant le courant moyen de soudage, la tension moyenne de soudage, la durée totale de la séquence de soudage et l'énergie totale de la séquence de soudage.

22

## Fig. 2

20 — DISPLAY SELECT

21 — THREE TIME THUMBWHEELS 0-199 CYS

22 — FOUR CURRENT THUMBWHEELS 0-1999 AMPS

23 — STICK/STUD SW.

24 — LIFT CHECK SW.

25 — LOCKUP KEY SW.

26 — PILOT ACC KEY SW

27 — TRIGGER UP TO ISOLATORS 4N37

28 — DISPLAY (4-0.8" 7 SEG LED'S) 4 ADSP-3403

13 — TRIGGER SWITCH

40 — SWITCH BUFFER 4049

39 — SWITCH DECODER 77145

57 — DIGIT DECODER 4028

58 — DIGIT DRIVER 20888

59 — SEGMENT DRIVER 2981

62 — RS 232 BUFFERS 1488 1489

29 — PRINTER

34 — ADDR DECODER LS00, LS09, LS04, LS27, LS37, LS139

33 — ROM PGM. MEMORY (6K TOTAL) 32716

32 — RIOT I/O PORT (16 LINES) RAM MEMORY (128 BYTES) 16 BIT TIMER SY6532

31 — I/O PORT (20 LINES) V/A SY6522 TIMER 1 TIMER 2

45 — SCR PAIR SELECT

37 — 50µS PULSE GEN. 7425723

44 — SCR GATE DRIVERS S-75452

17 — SCR GATES

50 / 61

STICK MODE DISABLE
LIFT & PLUNGE & HAMMER
(TO DETERMINE CHUCK WITHDRAW)
PB7

60 — 4N37 GUN SENSER OPTO-ISOLATER

14 — GUN CAMLOCK SWITCH

51 — GUN SOLENOID DRIVE 4N37

18 — SOLENOID SWITCH

54 — 4N37 CHUCK SAVER CIRCUIT

56 — 15 VAC

55 — WELD TERMINALS

30 — 128 BYTES OF RAM MC6802

XTL 4Ω HTz

CONTROL 3
ADDRESS 11
DATA 8

36 — RESET GEN. 1/4 4093, 1/2 LS123

RESET LINE

48 — 1/4 LM324, RC4152 F→V CONVERTER

47 — 4N37 UPTO ISOLATOR

46 — RC4152 1/2 LP353 V→F CONVERTER

49 — 1/4 LM324 LO PASS FILTER — TERMINAL VOLTAGE

1/2 LP353 LO PASS FILTER

63 — +5.12V REF. MC1404AV5

35 — 8 CHANNEL A/D CONVERTER ADC0808

41 — 1/4 LM324 DIVIDER/BUFFER — HI RANGE CURRENT

42 — 1/4 LM324 DIVIDER/BUFFER — LO RANGE CURRENT

43 — SCHMITT TRIGGER LM324

3 PHASE BRIDGE OUTPUT 45

12 — CURRENT TRANSFORMES INPUT

CUTS MAIN BREAKER ON ABSENCE OF SCR TRIGGER PLUSE

58 — OVERIDE CIRCUIT 1/4 LS32, 1/2 LA 339

19 — OVERIDE

16 — 3Ø 208V INPUT

38 — ISOLATION TRANFORMERS

PHASE ROTATION

## Fig. 1

POWER SUPPLY 7805, 7815, 7815

o +15V
o +5V
o −15V
o +15VF
o GND F
o −15VF
GND

A.C. INPUT

10
11
15 Ω

0 073 818

# Fig. 3

J2

p g f e d c b a

R3 33Ω, ½W(8 PLACES)
R4
R5
R6
R7
R8
R9
R10

2 15 13 11 5 3 14 10
a b c d e f g dp
U1
ADSP-3403
c

2 15 13 11 5 3 14 10
a b c d e f g dp
U2
ADSP-3403
c

2 15 13 11 5 3 14 10
a b c d e f g dp
U3
ADSP-3403
c

2 15 13 11 5 3 14 10
a b c d e f g dp
U4
ADSP-3403
c

4,6,12,17    4,6,12,17    4,6,12,17    4,6,12,17

065
064
063
062

NOTE:
  PINOUT OF J2 MUST MATCH
  THAT OF J1 ON MAIN BOARD.

# Fig. 4

J2

SEL 8
SEL 7
SW3
SW2
SW1
SW0

STUD  STICK  LIFT    NORMAL
              CHECK

D2        D1
IN914     IN914

NOTE:
  PINOUT OF J14 MUST MATCH
  THAT OF J13 ON MAIN BOARD.

Fig. 5

0 073 818

# Fig. 6

0 073 818

Fig. 7

NOTE:
PINOUT OF JI MUST MATCH THAT OF J2 ON DISPLAY BOARD.

0 073 818

Fig. 8

0 073 818

NOTES:
1. J1-J8 10 POSITION SIP CONNECTORS.
2. PINOUT OF J1 MUST MATCH THAT OF J2 ON DISPLAY BOARD.
3. ALL DIODES IN914.

*Fig. 9*

Fig. 10

Fig. 11

*Fig. 12*

*Fig. 13*

0 073 818

INTERRUPT PØLL

RECEIVES CØNTRØL FRØM THE PRØCESSØR
INTERRUPT VECTØRING SEQUENCE

BACKGRØUND
RØUTINE

IRQ

ZERØ
CROSS
INTR

Y

Z CRØSS

TIMER
2
INTR

Y

TM2SRV

TIMER
1
INTR

Y

TM1SRV

RIØT
TIMER
INTR

Y

RIØT

RTI

START

RESTART

BACKGROUND

*Fig. 14*

12

0 073 818

PRØCESSØR RESTART VECTØR
PØINTS TØ HERE

*Fig. 15*

SELFTEST

( RESTART )

RAM TEST
0 - 7F
100-17F

RAM
OK? — N

RØM TEST
9000-9FFF

RØM
OK? — N

TIMTST:
TEST
TIMER 2

TIMER
OK — N

TIMTST
TEST
TIMER 1

TIMER
OK?

N

SET ERROR
0

1

1

CLEAR ALL
RAM EXCEPT
ERRØR 0

INITIALIZE
PERIPHERALS

60Hz
SWITCH
SET

Y

FREQUENCY
◄— 60Hz

FREQUENCY
◄— 50Hz

START TIME
SLICE
INTERRUPT

THE TIME SLICE
IS REFERRED TØ AS
A KILØHERTZ (KHz).
IT WILL BE EQUAL
TO 30 DEGREES OF
A LINE CYCLE.

WATCH:
RETRIGGER
SØFTWARE
WATCHDØG

TRIGGER
ON

Y

SET PILØT
ARC DEFAULT
PARAMETERS
AND FLAG
TØ IGNØRE
LINE VØLTAGE
MØNITØRING

2

13

*Fig. 16*

```
        ▽2

       ┌──────────┐ ──→
   ┌──→│  WATCH   │
   │   └──────────┘ ←──
   │        │
   │       ╱◇╲
   │      ╱    ╲    N
   │     ◇ ZERØ  ◇ ──┘
   │      ╲ CRØSS╱
   │       ╲   ╱
   │        │
   │   ┌──────────┐
   │   │ SET 150° │
   │   │  DELAY   │
   │   └──────────┘
   │        │
   │       ╱◇╲  ←──┐
   │      ╱    ╲   │ N
   └─────◇TIMEØUT◇─┘
          ╲    ╱
           ╲  ╱
            │
           ╱◇╲
          ╱    ╲
         ◇ PEAK  ◇ ──┐
         ◇ ØN REF.◇   │
          ╲INPUT ╱    │
           ╲    ╱     │
            │ Y       │
       ┌──────────┐   │
       │  STØRE   │   │
       │  A-B-C   │   │
       │ RØTATIØN │   │
       └──────────┘   │
            │ ┌───────┘
       ┌──────────┐
       │  STØRE   │
       │  A-C-B   │
       │ RØTATIØN │
       └──────────┘
            │
        ( BKGRND )
```

14

*Fig. 17*

BACKGRØUND (START)

( BKGRND )

WATCH:
RETRIGGER
SØFTWARE
WATCHDOG

DELAY
WHILE READING
SWITCHES → Y

N ← ERRØR
1 4 5 6 0 9

( DSPFMT )

GØ TØ
DISPLAY
FØRMAT
RØUTINE

N ← STICK
MØDE

( STKRTN )

GØ TØ
STICK
RØUTINE

△ 1

△ 1

TRIGGER
CLØSED → Y

STATE ← 0

LØCKUP
SET → Y

( DSPFMT )

WATCH:
RETRIGGER
SØFTWARE
WATCHDØG

GØ TØ
SUBRØUTINE
DEPENDING
ØN STATE

ERRØR 7 → Y

CLEAR
ERRØR 1 AND 2

LINE
TØ
PRINT → Y

PRTFMT

N ← STATE
=
0

( BKGRND )

# Fig. 18

**STATE 0**

- ABØRT LINE VØLTAGE MØNITØRING IN PRØCESS
- SET CØUNTER TO DELAY 3 CYCLES
- INITALIZE RAM FLAGS
- SET HAMMER CØUNTER TØ 20
- PADJA TØ GET PARAMETERS
- STATE ← 1

RETURN FRØM SUBRØUTINE

**RTS**

**STATE 1**

- DONE DELAYING — N
- DELAY CØUNTER ← PA PARAMETERS
- CLEAR CYCLE CØUNTER ERRØR 23 & CYCLES INCREMENTED FLAGS
- INANC SET PARAMETER FOR INITIAL H2 PHASE ANGLE
- WHDJA TO GET CURRENT PARAMETERS
- STATE ← 2

**RTS**

## *Fig. 19*

# Fig. 20

# Fig. 21

*Fig. 22*

```
                    ( STATE 6 )
                         │
                         ▼
                      ╱LIFT╲ ───Y──────────────────────┐
                      ╲CHECK╱                           │
                         │                              │
                         ▼                              │
                      ╱CHUCK╲                           │
                      ╲SAVER ╱ ──────────────┐          │
                      ╱ ØN  ╲                 │          │
                         │ Y                  │          │
                         ▼                    │          │
                      ╱ CS ╲                  │          │
                      ╲DELAY╱ ────────┐       │          │
                      ╱ DØNE╲         │       │          │
                         │ N          │       │          │
                         ▼            │       │          │
                   ┌──────────┐       │       │          │
                   │DEC DELAY │       │       │          │
                   │CØUNTER   │       │       │          │
                   └──────────┘       │       │          │
                         │            │       │          │
                         ▼            │       │          │
                      ╱     ╲         │       │          │
                      ╲ 20  ╱ ────────┼──►    │          │
                      ╱     ╲         │       │          │
                         │ Y          │       │          │
                         ▼            │       │          │
                   ┌──────────┐       │       │          │
                   │TURN ØFF  │       │       │          │
                   │CS        │       │       │          │
                   │ØUTPUT    │       │       │          │
                   └──────────┘       │       │          │
                         │            │       │          │
                      ( RTS )         │       │          │
                                      │       │          │
                         ┌────────────┘       │          │
                         ▼                     │          │
                      ╱ CS ╲                   │          │
                      ╲INPUT╱ ──── ( RTS )     │          │
                      ╱ACTIVE╲                 │          │
                         │ N                   │          │
                         ▼                     │          │
                   ┌──────────┐                │          │
                   │TURN ØFF  │                │          │
                   │ØUTPUT    │                │          │
                   └──────────┘                │          │
                         │                     │          │
                         ◄────────────────────┘          │
                         ▼                                │
                      ╱ CS ╲                              │
                      ╲INPUT╱ ──── ( RTS )                │
                      ╱ACTIVE╲                            │
                         │ N                              │
                         ◄───────────────────────────────┘
                         ▼
                      ╱TRIG.╲ ──── ( RTS )
                      ╲ ØN  ╱
                         │ N
                         ▼
                ┌─────────────────┐
                │RESET TRIG.      │
                │FLAG, SET        │
                │KHz, ENABLE FL.  │
                │STATE ◄──── 0    │
                │CLEAR AVG. ACCM. │
                └─────────────────┘
                         │
                      ( RTS )
```

# Fig. 23

# *Fig. 24*

STICK MØDE RØUTINE
(BACKGROUND)

```
    ( STKRTN )
        │
   ╱ ZERØ ╲
N ╱  CRØSS  ╲
◄─╲ FLAG SET ╱
   ╲       ╱
       │
  ┌─────────┐
  │  CLEAR  │
  │  FLAG   │
  └─────────┘
       │
   ╱ INITIAL ╲    Y
  ╱   ANGLE   ╲──────►
  ╲    SET    ╱
   ╲        ╱
       │
  ┌──────────┐
  │ INANG:   │ ───►
  │ SET PHASE│
  │ ANGLE TØ │ ◄───
  │ INITIAL  │
  └──────────┘
       │
  ┌──────────┐
  │ ANGLE:   │ ───►
  │ GET      │
  │ PARAMETERS│
  │ FØR DIALED│ ◄───
  │ IN CURRENT│
  └──────────┘
       │
  ┌──────────┐
  │HØUSEKEEPING│
  │ FØR      │
  │ BEGINNING │
  │ ØF WELD  │
  └──────────┘
       │
   ( DSPFMT )
       │
   ╱  HAVE  ╲
  ╱ SAMPLE   ╲
  ╲  I OR V  ╱──────►
   ╲        ╱
       │ N
  ( BKGRND )
       │
      ╲1╱
```

```
      ╲1╱
       │
  ┌──────────────┐
  │BLANK DISPLAY │
  │CLEAR SAMPLE  │
  │   FLAG       │
  └──────────────┘
       │
   ╱ CURRENT ╲    Y
  ╱    =0     ╲──────►
  ╲          ╱
   ╲        ╱
       │
  ┌──────────┐
  │ UPDATE   │
  │ CURRENT &│
  │ VØLTAGE TØTALS│
  └──────────┘
       │
   ╱  8TH   ╲    Y
  ╱ UPDATE   ╲──────►
  ╲          ╱
       │
  ┌──────────┐
  │ INCREMENT│
  │ CØUNTER  │
  └──────────┘
       │
  ┌──────────┐
  │ CØMPUTE  │
  │ AVERAGE ØF│
  │ 8 PREVIØUS│
  │ CYCLES   │
  └──────────┘
       │
  ┌──────────┐
  │ RESET    │
  │ ACCUMULATØRS│
  │ & CØUNTER│
  └──────────┘
       │
   ╱ SWITCH ╲
  ╱ SET TØ   ╲──────►
  ╲  STUD    ╱
       │ Y
  ┌──────────┐
  │ CLEAR    │
  │ STICK    │
  │ MØDE FLAG│
  └──────────┘
       │
   ( DSPFMT )
       │
  ( BKGRND )
```

**Fig. 25** 23/36

DISPLAY FORMAT ROUTINE
(BACKGROUND)

Fig. 26

# *Fig. 27*

ZERØ CRØSS INTERRUPT
SERVICE RØUTINE

RECEIVES CØNTRØL FRØM
INTERRUPT PØLL

# *Fig. 28*

TIMER 2 INTERRUPT
SERVICE RØUTINE
(ØNE-SHØT TIMER)

(RECEIVES CØNTRØL FRØM
THE INTERRUPT PØLL.)

```
         ( TM2SRV )
             |
      +-------------+
      | CLEAR THE   |
      | INTERRUPT   |
      +-------------+
             |
          / ERRØR \    Y
          \   7   /--------+
           \     /         |
             |             |
             | N           |
          / LIFT  \        |
          \ CHECK /--------+
           \     /         |
             |             |
             | N           |
      +-------------+      |
      | ØUTPUT CB   |      |
      | SCR PAIR    |      |
      +-------------+      |
             |<------------+
      +-------------+
      | SET SCR     |
      | .COUNT TØ 1;|
      | SET PB 7    |
      | MØDE TØ     |
      | AUTØ TØGGLE;|
      | START       |
      | TIMER 1     |
      | FØR 1 M.S., |
      | LATCHES     |
      | FØR 1.777M.S.|
      | ENABLE      |
      | TIMER 1;    |
      | DISABLE     |
      | TIMER 2     |
      +-------------+
             |
          / STATE \
          \   2   /--------+
           \     /         |
             | Y           |
      +-------------+      |
      | ENERGIZE    |      |
      | GUN         |      |
      | SØLENØID    |      |
      +-------------+      |
             |<------------+
         (  RTI  )
```

*Fig. 29*

27

# 0 073 818

TIMER 1 INTERRUPT
SERVICE RØUTINE
FREE RUNNING TIMER

RECEIVES CØNTRØL
FRØM THE INTERRUPT
PØLL

*Fig. 30*

```
                    ( TM1SRV )
                        │
              ┌─────────────────┐
              │ CLEAR THE       │
              │ INTERRUPT &     │
              │ MASK            │
              └─────────────────┘
                        │
                     ◇ TRANSMITTING ◇ ──────┐
                        │ Y                  │
              ┌─────────────────┐            │
              │ TX              │            │
              │ PRINTING        │            │
              └─────────────────┘            │
                        │                    │
                    ( RTS )                  │
                                             │
                        ┌────────────────────┘
                        │
                     ◇ FALLING      ◇ ── N ──┐
                     ◇ EDGE ØF PB7  ◇        │
                        │                    │
              ┌─────────────────┐            │
  DETAIL 1    │ CØMPUTE         │            │
              │ REGULATED       │            │
              │ BASE PHASE      │            │
              │ ANGLE           │            │
              └─────────────────┘            │
                        │                    │
                    ( RTI )                  │
                        ┌────────────────────┘
                        │
              ┌─────────────────┐
  DETAIL 2    │ SAMPLE, AVE.    │
              │ & GET NEXT      │
              │ SCR PAIR        │
              └─────────────────┘
                        │
                     ◇ ADJUST ◇ ── N ──┐
                        │               │
              ┌─────────────────┐       │
  DETAIL 3    │ CØMPUTE         │       │
              │ ADJUSTMENT      │       │
              └─────────────────┘       │
                        │               │
                        └───────┬───────┘
                        │
                     ◇ DRØP        ◇ ── N ──┐
                     ◇ FRØM HzANGLE◇        │
                     ◇ TØ INITIAL  ◇        │
                        │                   │
              ┌─────────────────┐           │
  DETAIL 4    │ CØMPUTE         │           │
              │ CHANGE          │           │
              └─────────────────┘           │
                        │                   │
                        └─────────┬─────────┘
                        │
              ┌─────────────────┐
  DETAIL 5    │ STØRE &         │
              │ ADJUST CHANGE   │
              │ IN TIMERS       │
              └─────────────────┘
                        │
                    ( RTI )
```

28

*Fig. 31*

COMPUTE REGULATED
BASE PHASE ANGLE

DETAIL 1

FIRST PHASE ØF CYCLE

SET INT. MASK

GET TERMINAL VØLTAGE & SAVE IN RAM

CLEAR INT MASK

LIFT CHECK

STATE 4

V < 10V

SET ERRØR 7

SET 60 SAMPLE FLAG

ADJUST MØDE

UPDATE CURR. AVG. ACCUM. INGR. CØUNT

CØUNT = 0

STICK ØR P.A.

2 PHASES

16

CØMPUTE IN

COMPUTE
$b_n \leftarrow \frac{\Delta T}{\Delta I}(I_I - I_m) + b_{n-1}$*

$b_n \geq 60°$
$b_n \geq 180°$

SET TØ END ØF RANGE 60° ØR 180°

CLEAR AVERAGE ACCUMULATØR

SET TIMER LATCHES TØ 60° - 1 MS

RTI

$*b_n \leftarrow \frac{\Delta T}{\Delta I}(I_I - I_m) + b_{N-1}$

WHERE:

$b_n$ IS THE ATH BASE PHASE ANGLE

$\frac{\Delta T}{\Delta I}$ IS THE CHANGE IN PHASE ANGLE FØR A 10 AMP. CHANGE IN CURRENT

$I_I$ IS THE IDEAL CURRENT (DIALED IN ØR PILØT ARC)

$I_m$ IS THE AVERAGE CURRENT FØR THE PREVIØUS 2 ØR 16 PHASES

$N-1$ IS THE PREVIØUS BASE PHASE ANGLE THAT WAS USED

# *Fig. 32*

SAMPLE AVERAGE &
GET NEXT SCR PAIR

```
         ( DETAIL 2 )
              │
       ┌──────────────┐
       │  SAMPLE &    │        ┌ IF IDEAL CURRENT < 350A
       │  SCALE       │ ─ ─ ─ ─┤ USE LØW RANGE OF ADC
       │  CURRENT     │        │ INPUT, ELSE USE HIGH
       └──────────────┘        └
              │
         ◇ CURRENT ◇
         ◇  = 0    ◇ ───────────────┐
              │ N                    │
       ┌──────────────┐              │
       │  CLEAR NØ    │              │
       │ CURRENT FLAG │              │
       └──────────────┘              │
              │←─────────────────────┘
       ┌──────────────┐
       │   AVG. 4     │
       │  SAMPLES     │
       │  (PHASES)    │
       └──────────────┘
              │
        ◇  6 SCR   ◇
        ◇  PAIRS   ◇ ──────┐
        ◇  FIRED   ◇       │
              │ Y          │
       ┌──────────────┐    │
       │   DISABLE    │    │
       │ TIMER 1 CLEAR│    │
       │   SCR PØRT   │    │
       └──────────────┘    │
              │            │
       ┌──────────────┐◄───┘
       │  GET NEXT    │
       │  PAIR FRØM   │
       │   TABLE      │
       └──────────────┘
              │
       ┌──────────────┐
       │ SET LATCHES  │
       │ FØR 1 MS     │
       └──────────────┘
              │
             ▽ 1
```

```
             △ 1
              │
        ◇  LIFT   ◇  Y
        ◇  CHECK  ◇ ──────────────┐
              │                   │
        ◇ ERRØR 7 ◇ Y             │
         ─────────── ──┐          │
              │        │          │
        ◇ STATE 7 ◇ N  │          │
         ────────── ───┼───┐      │
              │        │   │      │
              │←───────┘   │      │
       ┌──────────────┐    │      │
       │ LØAD BLANK   │    │      │
       │  SCR PAIR    │    │      │
       └──────────────┘    │      │
              │←───────────┘      │
       ┌──────────────┐           │
       │   ØUTPUT     │           │
       │ NEXT SCR PR. │           │
       └──────────────┘           │
              │←──────────────────┘
          ( RTI )
```

30

# *Fig. 33*

CØMPUTE
ADJUSTMENT
DETAIL #3

STICK
& 3 CØNSE-
CUTIVE OS — N

FOR
CURRENT

CLEAR STATE
ABØRT WELD

SKIP
ADJUST-
MENT — N

RTS

CØMPUTE
$T_n \leftarrow \frac{\Delta T}{\Delta I}(I_I - I_A) + b_n$  *

RESULT
ØUT ØF
RANGE — N

RANGE IS
FRØM 60°
TØ 180°

SET TO
MAXIMUM
(60° ØR 180°)

CØMPUTE
$\Delta T = T_n - T_{n-1}$

1

1

$\Delta T$
ØUT ØF
RANGE — N

RANGE IS
FRØM -512μs
TØ 1024μs

SET TØ
MAXIMUM
(-512 ØR 1024)

SAVE $\Delta T$
TTIM

$* \ T_n \longleftarrow \frac{\Delta T}{\Delta I}(I_I - I_A) + b_n$

WHERE:

$T_n$   IS ADJUSTED BASE PHASE ANGLE

$\frac{\Delta T}{\Delta I}$   IS SAME AS IN REGULATIØN FØRMULA
FRØM TABLE

$I_I$   IS SAME AS IN REGULATIØN FØRMULA

$I_A$   IS ACTUAL CURRENT SAMPLED THIS
PHASE

$b_n$   IS SAME AS IN REGULATIØN FØRMULA

31

# *Fig. 34*

COMPUTE CHANGE

( DETAL 4 )

STUD MØDE — Y → SET I₁ TØ PILØT ARC

CURRENT < 20A — Y → RTS

HØUSEKEEPING FØR STICK ARC

( STØRE )

STØRE CHANGE & ADJUST IN TIMERS

( STØRE )   DETAIL #5

TIMER 1 ENABLED — N

ST3: TØ ADJUST TIMER → FIG. 35

TIMER 2 ENABLED — N

ST 3: TØ ADJUST TIMER → FIG. 35

ALSØ ADJ. FIRTIME

( RTS )

NORMAL EXIT

*Fig. 35*

TØ ADJUST
TIMERS

( ST 3 )

READ
TIMER

RØLLØVER — Y

ADD AMØUNT
ØF △T

ØVERFLØW — N

SET TIME
TØ 100μS

TIMER 2 — Y

WRITE TØ
TIMER 1

( RTS )

CHANGE PB7
MØDE
WRITE TØ
TIMER 2
PUT MØDE
BACK TØ
TØGGLE PB7
SET LATCHES
FØR 1m.s.

( RTS )

33

# _Fig. 36_

RIØT TIMER

( RIØT )

LINE
MØNITØR
MØDE — N

TIME
FØR
PHASE b — N

SAMPLE ØB
AND STØRE
IN RAM

ABC
RØTATIØN

Y

CHANGE
CØUNT TØ
SAMPLE ØA
60° LATER

TIME
FØR ØA

Y

SAMPLE ØA

Ø A
IF LØW — Y

$|ØA - ØB| >$
40% ØF MAX — N

SET
ERRØR 4

( 1 )

---

( 1 ) ⌐ KHz

TIMER
2 ØR KHz
BUSY — N

( RTI )

INCREMENT
CHARACTER
SELECT MØD 10

CLEAR
DISPLAY
ØUTPUTS

ØUTPUT
NEW
CHARACTER
SELECT

ØUTPUT
NEW DISPLAY
DATA

GET SWITCH
DATA

( 2 )

# *Fig. 37*

```
        ┌─2─┐                        ┌─3─┐                        ┌─4─┐
          │                            │                            │
      ╱───────╲                    ╱───────╲              Y     ╱───────╲
     ╱   KEY   ╲                  ╱ TRIGGER ╲          ┌───────╱   KEY   ╲
     ╲ SWITCH  ╱────────┐         ╲ SELECT  ╱──────┐   │       ╲ LØCKED  ╱
      ╲SELECT ╱         │          ╲───────╱       │   │        ╲───────╱
       ╲─────╱          │              │ Y         │   │            │
          │ Y           │          ┌───────┐       │   │        ╱───────╲
      ╱───────╲         │          │ STØRE │       │   │       ╱ SWITCH  ╲──────┐
     ╱   KEY   ╲        │          │ TRIG. │       │   │       ╲ CHANGED  ╱     │
     ╲  MØVED  ╱────┐   │          │& LIFT │       │   │        ╲───────╱      │
      ╲───────╱     │   │          │  CK   │       │   │            │ Y        │
         │ Y        │   │          │ IMAGE │       │   │        ┌───────┐      │
     ┌───────┐      │   │          └───────┘       │   │        │ CLEAR │      │
     │ CLEAR │      │   │             │            │   │        │ ERRØR │      │
     │ ERRØR │      │   │          ( RTI )         │   │        │  2,3  │      │
     │  2,3  │      │   │                          │   │        │ FLAGS │      │
     │ FLAGS │      │   │                          │   │        └───────┘      │
     └───────┘      │   │                          │   │            │          │
         │ ◄────────┘   │                      ╱───────╲           ◄───────────┘
     ┌───────┐          │                     ╱ DISPLAY ╲           │
     │ STØRE │          │                     ╲SELECTØR ╱───────┐  ┌───────┐
     │  KEY  │          │                      ╲SELECT ╱        │  │ STØRE │
     │SWITCH │          │                       ╲─────╱         │  │SWITCH │
     │ IMAGE │          │                          │ Y          │  │ IN BCD│
     └───────┘          │                      ╱───────╲   Y    │  │BUFFER │
         │              │                     ╱ LØCKUP  ╲───┐    │  └───────┘
     ╱───────╲          │                     ╲FLAG SET ╱   │    │      │ ◄────┘
    ╱ LØCKUP  ╲         │                      ╲───────╱    │    │  ( RTI )
    ╲    &    ╱─────┐   │                          │        │    │
    ╲ ERRØR 2 ╱     │   │                      ╱───────╲    │    │
     ╲───────╱      │   │                     ╱ DISPLAY ╲   │    │
        │ Y         │   │                     ╲SELECTØR ╱───┤    │
     ┌───────┐      │   │                      ╲ MØVED ╱    │    │
     │  SET  │      │   │                       ╲─────╱     │    │
     │ LØCKUP│      │   │                          │ Y      │    │
     │  FLAG │      │   │                      ┌───────┐    │    │
     └───────┘      │   │                      │ CLEAR │    │    │
         │          │   │                      │ ERRØR │    │    │
      ( RTI )       │   │                      │  2,3  │    │    │
                    │   │                      │ FLAG  │    │    │
     ┌───────┐ ◄────┘   │                      └───────┘    │    │
     │ CLEAR │          │                          │ ◄──────┘    │
     │ LØCKUP│          │                      ┌───────┐         │
     │ FLAG  │          │                      │ STØRE │         │
     └───────┘          │                      │DISPLAY│         │
         │              │                      │ MØDE  │         │
      ( RTI )           ▼                      └───────┘         ▼
                      ┌─3─┐                        │           ┌─4─┐
                                                ( RTI )
```

*Fig. 38*